(19) **Europäisches Patentamt / European Patent Office / Office européen des brevets**

(11) **EP 4 782 957 A1**

(12) **EUROPEAN PATENT APPLICATION**
published in accordance with Art. 153(4) EPC

(43) Date of publication:
29.07.2026 Bulletin 2026/31

(21) Application number: 25780007.8

(22) Date of filing: 23.09.2025

(51) International Patent Classification (IPC):
$G06F\ 1/16$ (2006.01)    $F16H\ 19/04$ (2006.01)
$H02K\ 7/116$ (2006.01)    $H04M\ 1/02$ (2006.01)

(86) International application number:
PCT/KR2025/014874

(87) International publication number:
WO 2026/121509 (11.06.2026 Gazette 2026/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 02.12.2024 KR 20240176909
13.01.2025 KR 20250004892

(71) Applicant: SAMSUNG ELECTRONICS CO., LTD.
Yeongtong-gu
Suwon-si, Gyeonggi-do 16677 (KR)

(72) Inventors:
• CHO, Hyoungtak
  Suwon-si, Gyeonggi-do 16677 (KR)
• KANG, Hyunggwang
  Suwon-si, Gyeonggi-do 16677 (KR)

• KIM, Yongyeon
  Suwon-si, Gyeonggi-do 16677 (KR)
• KIM, Yonghwa
  Suwon-si, Gyeonggi-do 16677 (KR)
• SIM, Jaewon
  Suwon-si, Gyeonggi-do 16677 (KR)
• YEOM, Hyunho
  Suwon-si, Gyeonggi-do 16677 (KR)
• YOO, Changhee
  Suwon-si, Gyeonggi-do 16677 (KR)
• LEE, Wonho
  Suwon-si, Gyeonggi-do 16677 (KR)
• JEONG, Hoyoung
  Suwon-si, Gyeonggi-do 16677 (KR)
• LEE, Jungwoo
  Suwon-si, Gyeonggi-do 16677 (KR)

(74) Representative: HGF
HGF Limited
4th Floor, 1 City Square
Leeds LS1 2ES (GB)

(54) **ELECTRONIC DEVICE INCLUDING DRIVING ASSEMBLY**

(57) The disclosure relates to an electronic device including a driving assembly. A driving assembly according to an embodiment of the disclosure may be accommodated in an electronic device. The driving assembly may comprise a motor configured to generate a rotational force, and comprising a shaft configured to rotate along a rotational axis, a speed reduction gear assembly connected to the motor, and a driving gear connected to the speed reduction gear assembly. The speed reduction gear assembly may comprise a first central gear connected to the shaft and comprising a first central gear tooth, a first peripheral gear comprising a first peripheral gear tooth engaged with the first central gear tooth, and a ring gear formed in a ring shape centered around the rotational axis to surround the first peripheral gear and engaged with the first peripheral gear. A tooth surface of the first central gear may comprise a first end area and a second end area, which are end areas of the tooth surface of the first central gear in a direction of the rotational axis. A curve may be formed in the first end area in a direction in which a tooth thickness of the first central gear tooth decreases. A tooth surface of the first peripheral gear may comprise a third end area corresponding to the first end area and a fourth end area corresponding to the second end area. A curve may be formed in the fourth end area in a direction in which a tooth thickness of the first peripheral gear tooth decreases.

(Cont. next page)

FIG. 8

## Description

[Technical Field]

Embodiments of the disclosure relate to an electronic device including a driving assembly, e.g., an electronic device including a driving assembly capable of enhancing the durability of gears included in a speed reduction gear assembly of the driving assembly, and enhancing the stability and efficiency of the speed reduction gear assembly.

[Background Art]

With the development of information and communication technology and semiconductor technology, various functions are packed in one portable electronic device. For example, an electronic device may implement not only communication functions but also entertainment functions, such as playing games, multimedia functions, such as playing music and videos, communication and security functions for mobile banking, and scheduling or e-wallet functions. These electronic devices have been downsized to be conveniently carried by users.

As mobile communication services extend up to multimedia service sectors, electronic devices require a larger display to allow users satisfactory use of multimedia services as well as voice call or text messaging services. This, however, trades off the trend of electronic devices being compact.

The above-described information may be provided as related art for the purpose of helping understanding of the disclosure. No claim or determination is made as to whether any of the foregoing is applicable as background art in relation to the disclosure.

[Disclosure of Invention]

[Solution to Problems]

A driving assembly according to an embodiment of the disclosure may be accommodated in an electronic device. The driving assembly may comprise a motor configured to generate a rotational force, and comprising a shaft configured to rotate along a rotational axis, a speed reduction gear assembly connected to the motor, and a driving gear connected to the speed reduction gear assembly. The speed reduction gear assembly may comprise a first central gear connected to the shaft and comprising a first central gear tooth, a first peripheral gear comprising a first peripheral gear tooth engaged with the first central gear tooth, and a ring gear formed in a ring shape centered around the rotational axis to surround the first peripheral gear and engaged with the first peripheral gear. A tooth surface of the first central gear may comprise a first end area and a second end area, which are end areas of the tooth surface of the first central gear in a direction of the rotational axis. A curve may be formed in the first end area in a direction in which a tooth thickness of the first central gear tooth decreases. A tooth surface of the first peripheral gear may comprise a third end area corresponding to the first end area and a fourth end area corresponding to the second end area. A curve may be formed in the fourth end area in a direction in which a tooth thickness of the first peripheral gear tooth decreases.

An electronic device according to an embodiment of the disclosure may comprise a housing including a first housing portion and a second housing portion movably connected to the first housing portion, a flexible display disposed on the first housing portion and the second housing portion and configured to change in at least one of shape or size as the second housing portion moves with respect to the first housing portion, and a driving assembly disposed on at least one of the first housing portion or the second housing portion and configured to provide power to allow the second housing portion to move with respect to the first housing portion. The driving assembly may comprise a motor configured to generate a rotational force, and comprising a shaft configured to rotate along a rotational axis, a speed reduction gear assembly connected to the motor, and a driving gear connected to the speed reduction gear assembly. The speed reduction gear assembly may comprise a first central gear connected to the shaft and comprising a first central gear tooth, a first peripheral gear comprising a first peripheral gear tooth engaged with the first central gear tooth, and a ring gear engaged with the first peripheral gear. A tooth surface of the first central gear may comprise a first end area and a second end area, which are end areas of the tooth surface of the first central gear in a direction of the rotational axis. A curve may be formed in the first end area in a direction in which a tooth thickness of the first central gear tooth decreases. A tooth surface of the first peripheral gear may comprise a third end area corresponding to the first end area and a fourth end area corresponding to the second end area. A curve may be formed in the fourth end area in a direction in which a tooth thickness of the first peripheral gear tooth decreases.

An electronic device according to an embodiment of the disclosure may comprise a housing including a first housing portion and a second housing portion movably connected to the first housing portion, a flexible display disposed on the first housing portion and the second housing portion and configured to change in at least one of shape or size as the second housing portion moves with respect to the first housing portion, and a driving assembly disposed on at least one of the first housing portion or the second housing portion and configured to provide power to allow the second housing portion to move with respect to the first housing portion. The driving assembly may comprise a motor configured to generate a rotational force, and comprising a shaft configured to rotate along a rotational axis, a speed reduction gear assembly connected to the motor, and a driving gear connected to the speed reduction gear assembly. The speed reduction gear assembly may comprise a first central gear connected to the shaft, a first peripheral gear engaged with the first central gear, a first carrier connected to a center of the first peripheral gear, and configured to rotate around the rotation axis, a second central gear configured to, together with the first carrier, rotate around the rotation axis, a second peripheral gear engaged with the second central gear, and a ring gear formed in a ring shape centered around the rotational axis to surround the first peripheral gear and the second peripheral gear, and engaged with the first peripheral gear and the second peripheral gear. A first face width of the first central gear and a second face width of the second central gear may be different from each other. A third face width of the first peripheral gear and a fourth face width of the second peripheral gear may be different from each other.

**[Brief Description of Drawings]**

The foregoing and other aspects, configurations, and/or advantages of an embodiment of the disclosure will be more apparent from the following detailed description taken in conjunction with the accompanying drawings.

FIG. 1 is a block diagram illustrating an electronic device in a network environment according to an embodiment of the disclosure;

FIG. 2 is a view illustrating a state in which a portion of a display is received in a housing according to an embodiment of the disclosure;

FIG. 3 is a view illustrating a state in which a portion of a display is exposed to the outside of a housing according to an embodiment of the disclosure;

FIG. 4 is an exploded perspective view illustrating an electronic device according to an embodiment of the disclosure;

FIG. 5 is a perspective view illustrating a partial configuration of an electronic device according to an embodiment of the disclosure;

FIG. 6 is a plan view illustrating a partial configuration of an electronic device according to an embodiment of the disclosure;

FIG. 7 is a plan view illustrating a partial configuration of an electronic device according to an embodiment of the disclosure;

FIG. 8 is a cross-sectional view illustrating a partial configuration of an electronic device according to an embodiment of the disclosure;

FIG. 9 is a cross-sectional view illustrating a partial configuration of an electronic device according to an embodiment of the disclosure;

FIG. 10 is an enlarged cross-sectional view illustrating a partial configuration of an electronic device according to an embodiment of the disclosure;

FIG. 11 is a perspective view illustrating a partial configuration of an electronic device according to an embodiment of the disclosure;

FIG. 12 is a side view illustrating a partial configuration of an electronic device according to an embodiment of the disclosure;

FIG. 13 is a view briefly illustrating a cross section of a partial configuration of an electronic device according to an embodiment of the disclosure;

FIG. 14 is an enlarged perspective view illustrating a partial configuration of an electronic device according to an embodiment of the disclosure;

FIG. 15 is an enlarged perspective view illustrating a partial configuration of an electronic device according to an embodiment of the disclosure;

FIG. 16 is a view briefly illustrating an operational process of a partial configuration of an electronic device according to an embodiment of the disclosure;

FIG. 17 is a view briefly illustrating an operational process of a partial configuration of an electronic device according to an embodiment of the disclosure;

FIG. 18 is a graph illustrating comparison between an electronic device according to an embodiment of the disclosure and a comparative example;

FIG. 19 is a view briefly illustrating a cross section of a partial configuration of an electronic device according to an embodiment of the disclosure;

FIG. 20 is a side view illustrating a partial configuration of an electronic device according to an embodiment of the disclosure;

FIG. 21 is a view briefly illustrating a cross section of a partial configuration of an electronic device according to an embodiment of the disclosure;

FIG. 22 is a side view illustrating a partial configuration of an electronic device according to an embodiment of the disclosure;

FIG. 23 is a view briefly illustrating a cross section of a partial configuration of an electronic device according to an embodiment of the disclosure;

FIG. 24 is a side view illustrating a partial configuration of an electronic device according to an embodiment of the disclosure; and

FIG. 25 is an exploded perspective view illustrating an electronic device according to an embodiment of the disclosure.

Throughout the drawings, like reference numerals may be assigned to like parts, components, and/or structures.

**[Mode for the Disclosure]**

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

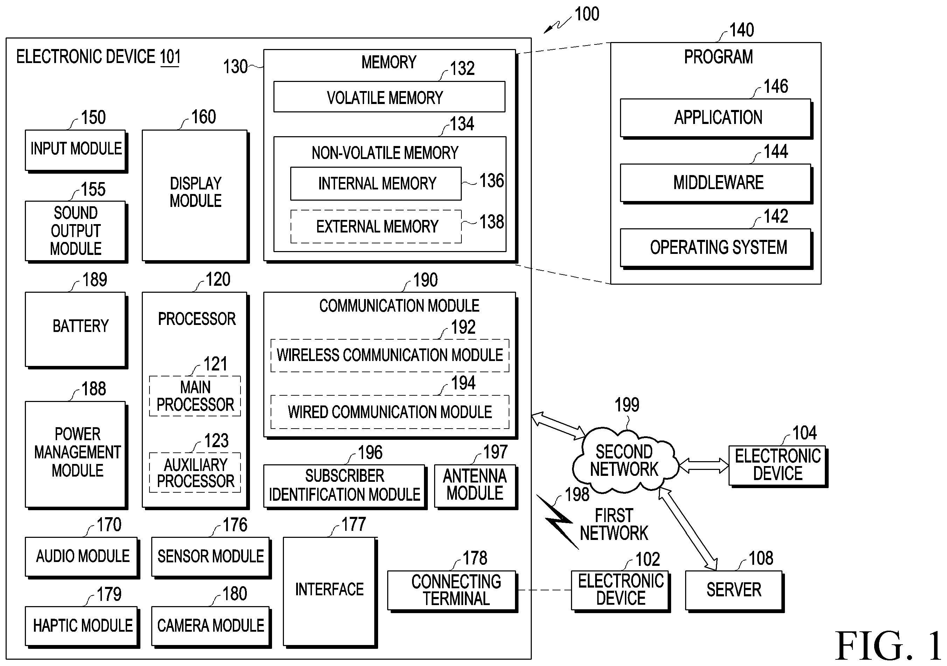

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application).

According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

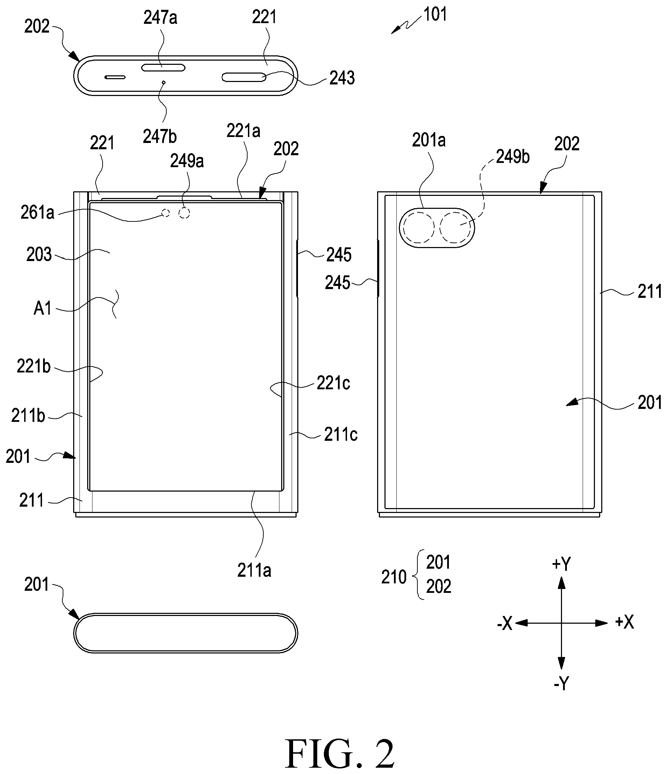

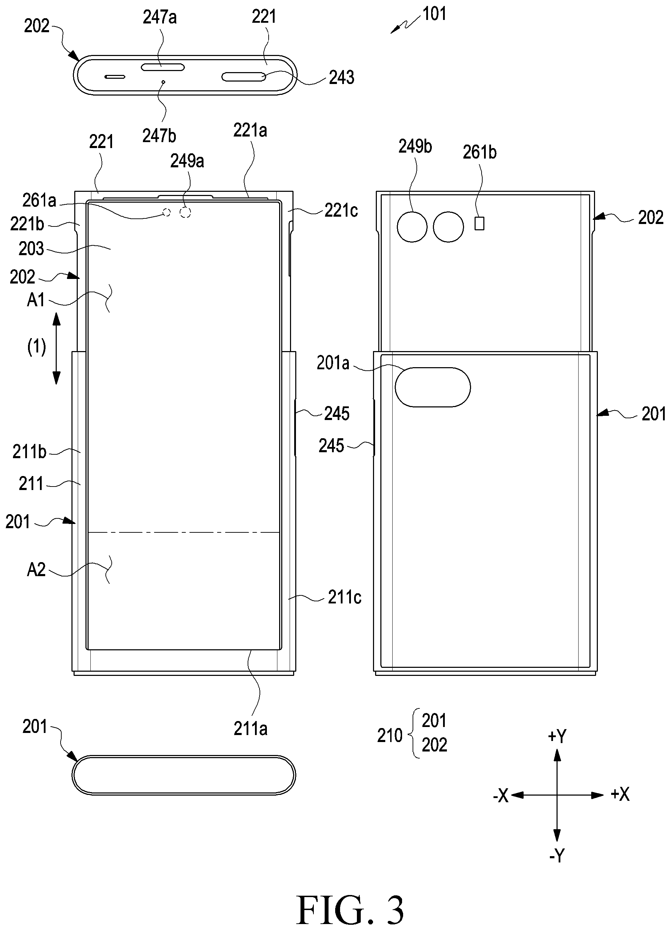

FIG. 2 is a view illustrating a state in which a portion of a display is received in a housing according to an embodiment of the disclosure. FIG. 3 is a view illustrating a state in which a portion of a display is exposed to the outside of a housing according to an embodiment of the disclosure.

Specifically, FIG. 2 is a view illustrating a state in which a second display area (e.g., the display area A2 of FIG. 3) of a display is received in a housing according to an embodiment of the disclosure. FIG. 3 is a view illustrating a state in which a second display area of a display is exposed to the outside of a housing according to an embodiment of the disclosure; FIGS. 2 and 3 illustrate a structure in which the flexible display 203 (e.g., flexible display or rollable display) is extended in the length direction (e.g., +Y direction) when the electronic device 101 is viewed from the front. However, the extending direction of the flexible display 203 is not limited to one direction (e.g., +Y direction). For example, the extending direction of the flexible display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the flexible display 203 is closed. The state illustrated in FIG. 3 may be referred to as a slide-out state of the electronic device 101 or a state in which the second display area A2 of the flexible display 203 is open.

According to an embodiment, the electronic device 101 (e.g., the electronic device 101 of FIG. 1) may include a housing 210. The housing 210 may include a first housing portion 201 and a second housing portion 202 movably connected to the first housing portion 201. According to an embodiment, the electronic device 101 may be interpreted as having a structure in which the first housing portion 201 is disposed to be slidable with respect to the second housing portion 202. According to an embodiment, the second housing portion 202 may be disposed to perform reciprocating motion by a predetermined distance in a predetermined direction with respect to the first housing portion 201, for example, a direction indicated by an arrow (1).

According to an embodiment, the second housing portion 202 may be referred to as a slide portion or a slide housing, and may be movable relative to the first housing portion 201. According to an embodiment, the second housing portion 202 may receive various electrical and electronic components, such as a circuit board or a battery. When the electronic device 101 is in the slide-in state, the second housing portion 202 may be defined as being at a retracted position, and when the electronic device 101 is in the slide-out state, the second housing portion 202 may be defined as being at an extended position.

According to an embodiment, the slide-in state of the electronic device 101 (or the slide-out state of the electronic device 101) may be changed into the slide-out state of the electronic device 101 (or the slide-in state of the electronic device 101) based on a defined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing portion 201 or a portion of the second housing portion 202. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or the slide-out state of the electronic device 101) may be changed into the slide-out state (or the slide-in state of the electronic device 101) in response to a touch input having a pressing strength of a reference strength or more at a contact point on the screen display area (e.g., the first display area A1). For example, the slide-in state (or the slide-out state of the electronic device 101) may be changed into the slide-out state (or the slide-in state of the electronic device 101) in response to a voice input received through the microphone of the electronic device 101. For example, the slide-in state (or the slide-out state of the electronic device 101) may be changed into the slide-out state (or the slide-in state of the electronic device 101) in response to an external force applied to the first housing portion 201 and/or the second housing portion 202 to move the second housing portion 202 with respect to the first housing portion 201. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. However, the slide in-out operations of the electronic device 101 are not limited thereto.

According to an embodiment, the first housing portion 201 may receive an actuator (e.g., a motor), a speaker, a sim socket, and/or a sub circuit board electrically connected with a main circuit board. The second housing portion 202 may receive a main circuit board on which electric components, such as an application processor (AP) or a communication processor (CP) are mounted. According to an embodiment, the second housing portion 202 may receive the actuator, speaker, sim socket, and/or the sub circuit board electrically connected with the main circuit board, and the first housing portion 201 may receive the main circuit board where electrical components, such as an application processor (AP) or a communication processor (CP), are mounted. According to an embodiment, the sub circuit board and the main circuit board may be disposed in the first housing portion 201 or the second housing portion 202.

According to an embodiment, the first housing portion 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

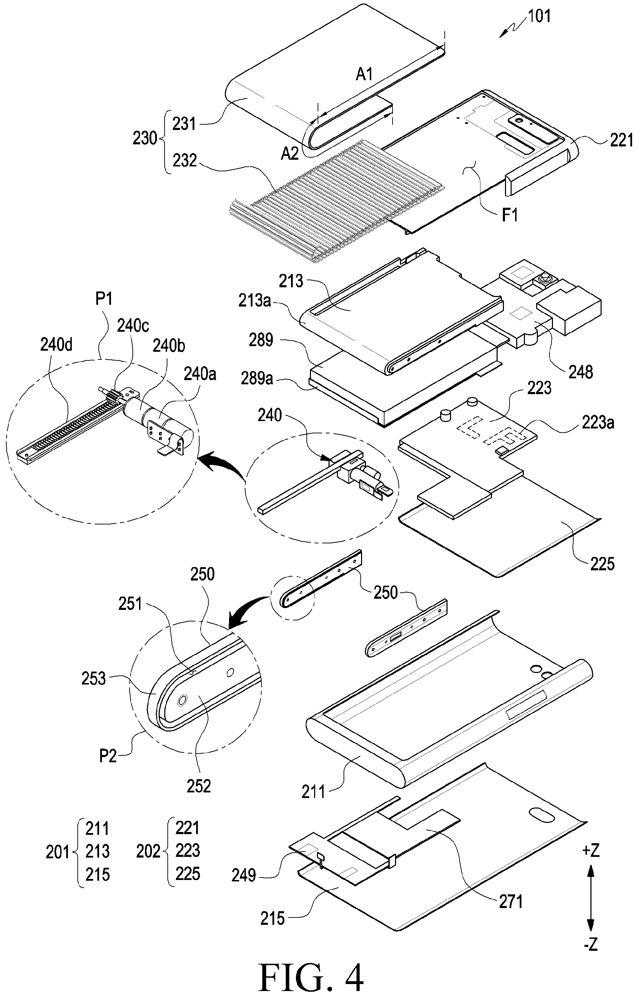

According to an embodiment, the 1-1th sidewall 211a, 1-2th sidewall 211b, and 1-3th sidewall 211c of the first cover member 211 may be formed to have an opening in a side surface (e.g., a front surface or front face) to receive (or surround) at least a portion of the second housing portion 202. For example, at least a portion of the second housing portion 202 may be surrounded by the first housing portion 201 and be slid in the direction parallel to the first surface (e.g., the first surface F1 of FIG. 4), e.g., arrow (1) direction, while being guided by the first housing portion 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the flexible display 203. For example, at least a portion of the flexible display 203 may be formed to be surrounded by the 1-1th sidewall 211a, the 1-2th sidewall 211b, and/or the 1-3th sidewall 211c of the first cover member 211.

According to an embodiment, the second housing portion 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the flexible display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing portion 202 moves in a first direction (e.g., direction (1)) parallel to the 2-2th sidewall 221b or the 2-3th sidewall 221c, the slide-in state and slide-out state of the electronic device 101 may be formed. In the slide-in state of the electronic device 101, the second housing portion 202 may be positioned at a first distance from the 1-1th sidewall 211a of the first housing portion 201. In the slide-out state of the electronic device 101, the second housing portion 202 may move to be positioned at a second distance larger than the first distance from the 1-1th sidewall 211a of the first housing portion 201. In an embodiment, in the slide-in state of the electronic device 101, the first housing portion 201 may be formed to surround a portion of the 2-2th sidewall 221b and the 2-3th sidewall 221c.

According to an embodiment, the electronic device 101 may have an intermediate state between the slide-in state (e.g., fully closed state) of FIG. 2 and the slide-out state (e.g., fully open state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the flexible display 203 slides in the intermediate state of the electronic device 101, the area exposed to the outside may vary. For example, in the intermediate state of the electronic device 101, the ratio of the width (length in the X direction) to the height (length in the Y direction) of the flexible display 203 and/or the distance between the 1-1th sidewall 211a and the 2-1th sidewall 221a may be changed based on the slide of the electronic device 101.

According to an embodiment, the electronic device 101 may include a flexible display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the flexible display 203 may be disposed in the first housing portion 201 and the second housing portion 202. The flexible display 203 may be formed so that the size of a portion of the housing 210, which may be viewed from the front, is changed based on the slide of the second housing portion 202. For example, the flexible display 203 may be configured to change in shape or size as the second housing portion 202 moves with respect to the first housing portion 201. According to an embodiment, the flexible display 203 may include a first display area A1 and a second display area A2 configured to be exposed to the outside of the electronic device 101 based on the slide of the second housing portion 202.

According to an embodiment, the first display area A1 may be disposed substantially on the second housing portion 202. For example, the first display area A1 may be disposed on the second cover member 221 of the second housing portion 202. According to an embodiment, the second display area A2 may extend from the first display area A1, and the second display area A2 may be received in, or visually exposed to the outside of, the first housing portion 201 as the second housing portion 202 slides relative to the first housing portion 201. According to an embodiment, as the electronic device 101 changes from the slide-in state to slide-out state, the flexible display 203 may extend in the lower direction (e.g., -Y direction) of the electronic device 101. For example, in the slide-out state of the electronic device 101, the second display area A2 may be visually exposed under the electronic device 101 (e.g., in the -Y direction). According to an embodiment, as the electronic device 101 changes from the slide-in state to slide-out state, the flexible display 203 may extend in the upper direction (e.g., +Y direction) of the electronic device 101. For example, in the slide-out state of the electronic device 101, the second display area A2 may be visually exposed above the electronic device 101 (e.g., in the +Y direction).

According to an embodiment, the second display area A2 may be received in the space positioned inside the first housing portion 201 or exposed to the outside of the electronic device while being substantially guided by one area (e.g., the curved surface 213a of FIG. 4) of the first housing portion 201. According to an embodiment, the second display area A2 may move based on a slide of the second housing portion 202 in the first direction (e.g., the direction indicated by the arrow (1)). For example, while the second housing portion 202 slides, a portion of the second display area A2 may be deformed into a curved shape in a position corresponding to the curved surface 213a of the first housing portion 201.

According to an embodiment, as viewed from above the second cover member 221 (e.g., front cover), if the electronic device 101 changes from the slide-in state to slide-out state (e.g., if the second housing portion 202 slides to extend from the first housing portion 201), the second display area A2 may be gradually exposed to the outside of the first housing portion 201 and, together with the first display area A1, form a substantially flat surface. According to an embodiment, the flexible display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to an embodiment, the key input device 245 may be positioned in an area of the housing 210 (e.g., the first housing portion 201 and/or second housing portion 202). Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing portion 201. According to an embodiment, at least a portion of the key input device 245 may be disposed on the 2-1th sidewall 221a, the 2-2th sidewall 221b, and/or the 2-3th sidewall 221c of the second housing portion 202.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing portion 202, but is not limited thereto. For example, the connector hole 243 or a connector hole not shown may be disposed in the first housing portion 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing portion 201 and/or the second housing portion 202.

According to an embodiment, the camera modules 249a and 249b may include a first camera module 249a (e.g., front camera) and/or a second camera module 249b (e.g., rear camera). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be positioned to face the same direction (e.g., the +Z direction of FIG. 4) as the flexible display 203. For example, the first camera module 249a may be disposed in an area around the first display area A1 or overlapping the flexible display 203. When disposed in the area overlapping the flexible display 203, the first camera module 249a may capture the subject through the flexible display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction (e.g., the -Z direction of FIG. 4) opposite to the first display area A1. According to an embodiment, the first camera module 249a and/or the second camera module 249b may be disposed on the second housing portion 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and/or slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225. According to an embodiment, the second camera module 249b may be visually exposed to the outside of the electronic device 101 to capture the outside of the electronic device 101 in the slide-in state and slide-out state of the electronic device 101. For example, the first housing portion 201 (e.g., the first rear plate 215 of FIG. 4) may include an opening 201a for the second camera module 249b.

According to an embodiment, an indicator (not shown) of the electronic device 101 may be disposed on the first housing portion 201 or the second housing portion 202, and the indicator may include a light emitting diode to provide state information about the electronic device 101 as a visual signal. The sensor module 261a or 261b of the electronic device 101 may produce an electrical signal or data value corresponding to the internal operation state or external environment state of the electronic device. The sensor module 261a or 261b may include a proximity sensor, a fingerprint sensor, and/or a biometric sensor (e.g., an iris/face recognition sensor or a heartrate monitoring (HRM) sensor). According to an embodiment, the sensor module 261a or 261b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 261a or 261b may be disposed in the first housing portion 201 and/or the second housing portion 202. The sensor modules 261a and 261b may include a first sensor module 261a (e.g., proximity sensor or illuminance sensor) disposed on the front surface of the electronic device 101 and/or a second sensor module 261b (e.g., heart rate monitoring (HRM) sensor) disposed on the rear surface of the electronic device 101.

FIG. 4 is an exploded perspective view illustrating an electronic device according to an embodiment of the disclosure.

The detailed configuration of the electronic device 101 according to an embodiment of the disclosure not described below may be identical or similar to the detailed configuration of the electronic device 101 according to an embodiment of the disclosure described with reference to FIGS. 2 and 3.

According to an embodiment, an electronic device 101 (e.g., the electronic device 101 of FIGS. 1 to 3) may include a first housing portion 201, a second housing portion 202, a flexible display 230, and a driving assembly 240. The configuration of the first housing portion 201, the second housing portion 202, and the flexible display 230 of FIG. 4 may be identical in whole or part to the configuration of the first housing portion 201, the second housing portion 202, and the flexible display 203 of FIG. 2 and/or 3.

According to an embodiment, the first housing portion 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and accommodate a component (e.g., battery 289) positioned in the frame 213. According to an embodiment, the first cover member 211 may be formed to surround at least a portion of the second housing portion 202. According to an embodiment, the first cover member 211 may protect the components (e.g., the second circuit board 249 and the frame 213) positioned in the first housing portion 201 from external impact. According to an embodiment, the second circuit board 249 electrically connected with an electric component (e.g., an actuator, a speaker, a sim socket, and/or the first circuit board 248) may be connected to the first cover member 211.

According to an embodiment, the frame 213 may be connected to the first cover member 211. For example, the frame 213 may be connected to the first cover member 211. The second housing portion 202 is movable relative to the first cover member 211 and/or the frame 213. According to an embodiment, the frame 213 may accommodate the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved portion 213a facing the flexible display 230.

According to an embodiment, the first rear plate 215 may substantially form at least a portion of the exterior of the first housing portion 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing portion 202 may include a second cover member 221 (e.g., the second cover member 221 of FIGS. 2 and 3), a rear cover 223, and a second rear plate 225.

According to an embodiment, the second cover member 221 may be connected to the first housing portion 201 through the guide rail 250 and, while being guided by the guide rail 250, reciprocate linearly in one direction (e.g., the direction of arrow (1) in FIG. 3).

According to an embodiment, the second cover member 221 may support at least a portion of the display panel 231. For example, the second cover member 221 may include a first surface F1. The first display area A1 of the display panel 231 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221. According to an embodiment, the second cover member 221 may protect the components (e.g., the first circuit board 248 and the rear cover 223) positioned in the second housing portion 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed of an injection molded product (e.g., an antenna carrier) of a dielectric material, the at least one antenna element 223a may be disposed on an outer surface (e.g., one surface facing in the -Z-axis direction) of the rear cover 223. For example, the at least one antenna element 223a may include a laser direct structuring (LDS) antenna pattern formed on the outer surface of the rear cover 223. For example, the at least one antenna element 223a may be formed to be embedded when the rear cover 223 is injection-molded. For example, the at least one antenna element 223a may be configured to transmit or receive wireless signals in a designated frequency band (e.g., a legacy band) by electrically connecting with a wireless communication circuit (e.g., the wireless communication module 192 of FIG. 1) disposed on the first circuit board 248.

According to an embodiment, the second rear plate 225 may substantially form at least a portion of the exterior of the second housing portion 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the flexible display 230 may include a display panel 231 (e.g., the flexible display 203 of FIGS. 2 and/or 3) and a multi-bar structure 232 supporting the display panel 231. According to an embodiment, the display panel 231 may be referred to as a flexible display, a foldable display, and/or a rollable display. According to an embodiment, the first display area A1 of the display panel 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display panel 231. According to an embodiment, as the second housing portion 202 slides, the multi-bar structure 232 may move with respect to the first housing portion 201. In the slide-in state of the electronic device 101 (e.g., FIG. 2), the multi-bar structure 232 may be mostly received in the first housing portion 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving assembly 240 may move the second housing portion 202 relative to the first housing portion 201. For example, the driving assembly 240 may include an actuator 240a configured to generate a driving force for sliding the second housing portion 202 with respect to the first housing portion 201. The driving assembly 240 may include a gear 240c (e.g., a pinion) connected to the actuator 240a and a rack gear 240d configured to be engaged with the gear. FIG. 4 illustrates components (e.g., the actuator 240a, the speed reduction gear assembly 240b, or the gear 240c) of the driving assembly 240 inverted (e.g., facing the -Z-axis direction) in the circle P1.

According to an embodiment, the housing in which the rack gear 240d is positioned and the housing in which the actuator 240a is positioned may be different. According to an embodiment, the rack gear 240d may be connected to the first housing portion 201, and the actuator 240a may be connected to the second housing portion 202. According to an embodiment of the disclosure, the actuator 240a may be connected to the first housing portion 201, and the rack gear 240d may be connected to the second housing portion 202.

According to an embodiment, the actuator 240a may be controlled by a processor (e.g., the processor 120 of FIG. 1). For example, the processor 120 may include an actuator driver driving circuit and transfer a pulse width modulation (PWM) signal for controlling the speed of the actuator 240a and/or the torque of the actuator 240a to the actuator 240a. According to an embodiment, the actuator 240a may be electrically coupled to a processor (e.g., the processor 120 of FIG. 1) positioned on the circuit board (e.g., the first circuit board 248 of FIG. 4) using a flexible printed circuit board.

According to an embodiment, the second housing portion 202 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing portion 201. The second circuit board 249 may be electrically connected to the first circuit board 248 through a flexible board. The second circuit board 249 may be electrically connected with electric components disposed in an end area of the electronic device 101, such as the battery 289 or a speaker and/or a sim socket, and may transfer signals and power. According to an embodiment, the sub circuit board 249 may receive the antenna member 271 (e.g., a coil) or connect with the antenna member 271. The antenna member 271 may include a wireless charging antenna for a wireless charging first, a near field communication (NFC) antenna for an NFC first, and/or a multi-function coil (MFC) antenna including a magnetic secure transmission (MST) antenna for performing an electronic payment first. For example, the battery 289 may receive power from an external electronic device using the antenna member 271 for wireless charging. As another example, the battery 289 may transfer power to the external electronic device using the antenna member 271 for wireless charging.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be positioned on the frame 213. For example, the battery 289 may be surrounded by the frame 213 and the battery cover 289a. According to an embodiment, it may be positioned within the second housing portion 202 and is slidable along with the second housing portion 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing portion 201. For example, the guide rail 250 may be connected to the first cover member 211 and/or the frame 213. According to an embodiment, the slit 251 may be referred to as a groove or recess formed in the inner surface of the guide rail 250. FIG. 4 illustrates an enlarged guide rail 250 in the circle P2.

According to an embodiment, the guide rail 250 may provide a force to the multi-bar structure 232 based on the driving of the actuator 240a.

According to an embodiment, when the electronic device 101 changes from the slide-in state to the slide-out state, at least a portion of the second housing portion 202 may slide to be exposed to the outside from the first housing portion 201 through driving of the actuator 240a. For example, the gear 240c may rotate in a first rotation direction based on the driving of the actuator 240a. The rack gear 240d may be fixed to the first housing portion 201, and the actuator 240a may move together with the second housing part 202. The second housing portion 202 may slide to be exposed outside the first housing portion 201 based on the movement of the actuator 240a along the rack gear 240d.

According to an embodiment, when the electronic device 101 changes from the slide-in state to the slide-out state, the inner portion 252 of the guide rail 250 may provide a force to the multi-bar structure 232. The multi-bar structure 232 provided with the force may move along the slit 251 of the guide rail 250, and the second housing portion 202 may slide to extend with respect to the first housing portion 201. At least a portion of the flexible display 230 accommodated between the first cover member 211 and the frame 213 may be extended to the front surface.

According to an embodiment, when the electronic device 101 changes from the slide-out state to the slide-in state, at least a portion of the second housing portion 202 may slide to be inserted into the first housing portion 201 through driving of the actuator 240a. For example, the gear 240c may rotate in a second rotation direction opposite to the first rotation direction based on the driving of the actuator 240a. The rack gear 240d may be fixed to the first housing portion 201, and the actuator 240a may move together with the second housing part 202. The second housing portion 202 may slide into the inside of the first housing portion 201 based on the movement of the actuator 240a along the rack gear 240d.

According to an embodiment, when the electronic device 101 changes from the slide-out state to the slide-in state, the outer portion 253 of the guide rail 250 may provide a force to the bent multi-bar structure 232. The multi-bar structure 232 provided with the force may move along the slit 251 of the guide rail 250, and at least a portion of the second housing portion 202 may slide to be accommodated in the first housing portion 201. At least a portion of the flexible display 230 may be accommodated between the first cover member 211 and the frame 213.

According to an embodiment, the electronic device 101 may be configured to stop in a designated intermediate state between the slide-in state and the slide-out state by controlling driving of the actuator 240a (free stop function). According to an embodiment, the electronic device 101 may be changed to the slide-in state, the intermediate state, or the slide-out state through the user's manipulation in the state in which the driving force is not provided to the actuator 240a.

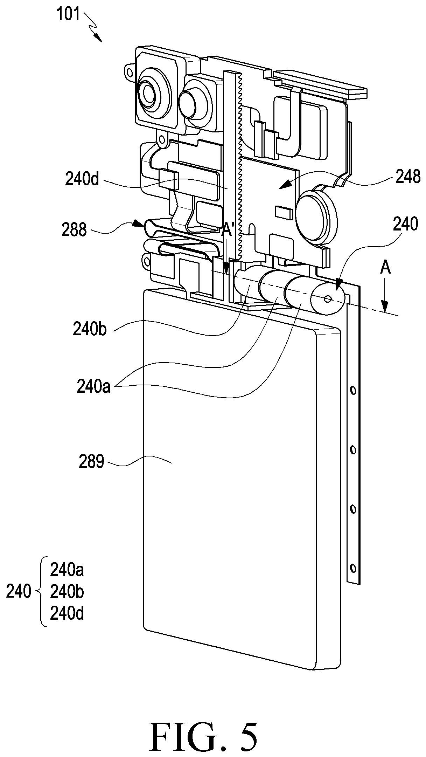

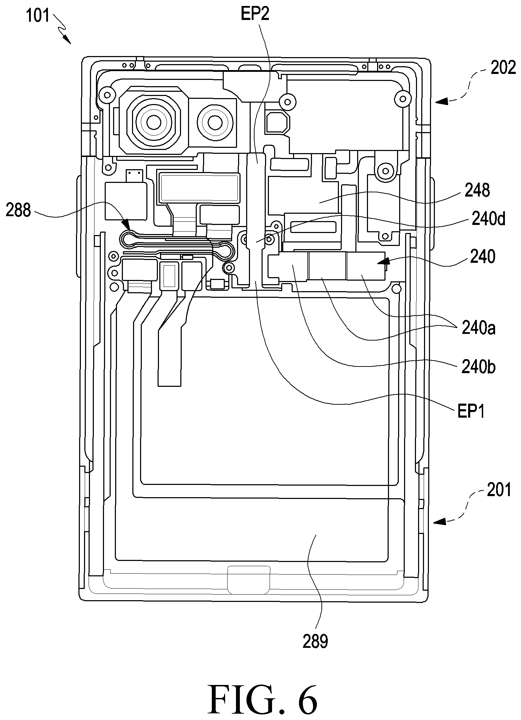

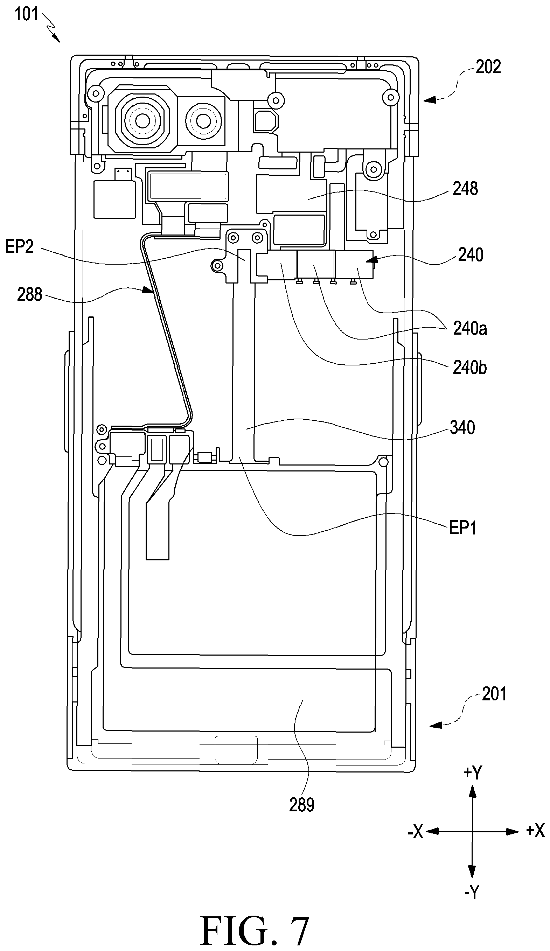

FIG. 5 is a perspective view illustrating a partial configuration of an electronic device according to an embodiment of the disclosure. FIG. 6 is a plan view illustrating a partial configuration of an electronic device according to an embodiment of the disclosure. FIG. 7 is a plan view illustrating a partial configuration of an electronic device according to an embodiment of the disclosure;

The detailed configuration of the electronic device 101 according to an embodiment of the disclosure not described below may be identical or similar to the detailed configuration of the electronic device 101 described with reference to FIGS. 2 to 4.

According to an embodiment, the electronic device 101 may include a circuit board 248, a flexible circuit board 288, and a battery 289. The circuit board 248 may be substantially the same as the first circuit board 248 described with reference to FIGS. 2 to 4. The battery 289 may be substantially the same as the battery 289 described with reference to FIGS. 2 to 4. The circuit board 248 and the battery 289 may be disposed inside the housing (e.g., the housing 210 of FIGS. 2 to 4). The electronic device 101 may include a flexible circuit board 288. The flexible circuit board 288 may connect the circuit board 248 and the battery 289. The flexible circuit board 288 may be folded or unfolded when the second housing portion 202 moves with respect to the first housing portion 201.

According to an embodiment, the electronic device 101 may include a driving assembly 240. The description of the driving assembly 240 may be substantially the same as the description of the driving device 240 made with reference to FIG. 4. The driving assembly 240 may generate power for moving the housing (e.g., the housing 210 of FIGS. 2 to 4). The driving assembly 240 may move the second housing portion 202. The battery 289 may supply power to the driving assembly 240. The processor 120 included in the circuit board 248 may control driving of the driving assembly 240. The driving assembly 240 may be referred to as a "driving device." The driving assembly 240 may be referred to as a "motor assembly." The driving assembly 240 may be referred to as a "power transmission device." The driving assembly 240 may be referred to as a "power transmission assembly."

According to an embodiment, the driving assembly 240 may include an actuator 240a. The actuator 240a may generate power. The actuator 240a may receive power from the battery 289. The actuator 240a may be referred to as a "power source" and/or a "motor".

According to an embodiment, the driving assembly 240 may include a speed reduction gear assembly 240b. The speed reduction gear assembly 240b may be connected to the actuator 240a. The speed reduction gear assembly 240b may be referred to as a "planet gear assembly."

According to an embodiment, the driving assembly 240 may include a driving gear (e.g., the gear 240c of FIG. 4). The driving gear (e.g., the gear 240c of FIG. 4) may be connected to the speed reduction gear assembly 240b. The driving gear (e.g., the gear 240c of FIG. 4) may be connected to the speed reduction gear assembly 240b. The driving gear may be referred to as a "pinion gear."

According to an embodiment, the electronic device 101 may include a rack gear 240d. The rack gear 240d may be connected to the driving assembly 240. The rack gear 240d may be connected to a driving gear (e.g., the gear 240c of FIG. 4). For example, the rack gear 240d may be engaged with the driving gear (e.g., the gear 240c of FIG. 4).

According to an embodiment, the rotational power generated by the actuator 240a may be transferred to the speed reduction gear assembly 240b. The speed reduction gear assembly 240b may reduce the revolutions per minute (RPM) of the rotational power generated by the actuator 240a. The speed reduction gear assembly 240b may increase the torque of the rotational power generated by the actuator 240a. The speed reduction gear assembly 240b may enhance the torque of the rotational power generated by the actuator 240a and transfer the torque to the driving gear (e.g., the gear 240c of FIG. 4). The driving gear (e.g., the gear 240c of FIG. 4) may be engaged with the rack gear 240d. The driving gear (e.g., the gear 240c of FIG. 4) may move linearly along the rack gear 240d by the rotational power transferred to the driving gear (e.g., the gear 240c of FIG. 4). The rack gear 240d may be fixed to the first housing portion 201, and the driving gear (e.g., the gear 240c of FIG. 4) may be fixed to the second housing portion 202. When the driving gear (e.g., the gear 240c of FIG. 4) moves linearly along the rack gear 240d, the second housing portion 202 may move linearly together with the driving gear (e.g., the gear 240c of FIG. 4). When the driving gear (e.g., the gear 240c of FIG. 4) moves linearly along the rack gear 240d, the second housing portion 202 may move with respect to the first housing portion 201.

Referring to FIG. 6, as illustrated in FIG. 2, at least a portion of the second housing portion 202 may be in a state of having been retracted into the first housing portion 201 (e.g., a slide-in state). The state of the electronic device 101 illustrated in FIGS. 2 and 6 may be defined as a "first state". In the first state of the electronic device 101, the driving gear (e.g., the gear 240c of FIG. 4) may be positioned further adjacent to the first end portion EP1 than the second end portion EP2 of the rack gear 240d.

Referring to FIG. 7, as illustrated in FIG. 3, at least a portion of the second housing portion 202 may be drawn out of the first housing portion 201 (e.g., a slide-out state). The state of the electronic device 101 illustrated in FIGS. 3 and 6B may be defined as a "second state". In the second state of the electronic device 101, the driving gear (e.g., the gear 240c of FIG. 4) may be positioned further adjacent to the second end portion EP2 than the first end portion EP1 of the rack gear 240d.

Referring to FIGS. 6 and 7, when the electronic device 101 changes from the first state to the second state, the actuator 240a, the speed reduction gear assembly 240b, the driving gear (e.g., the gear 240c of FIG. 4) and the motor 350 may move along the rack gear 240d. When the electronic device 101 changes from the first state to the second state, the actuator 240a, the speed reduction gear assembly 240b, the driving gear (e.g., the gear 240c of FIG. 4) and the motor 350 may move from the first end portion EP1 of the rack gear 240d toward the second end portion EP2.

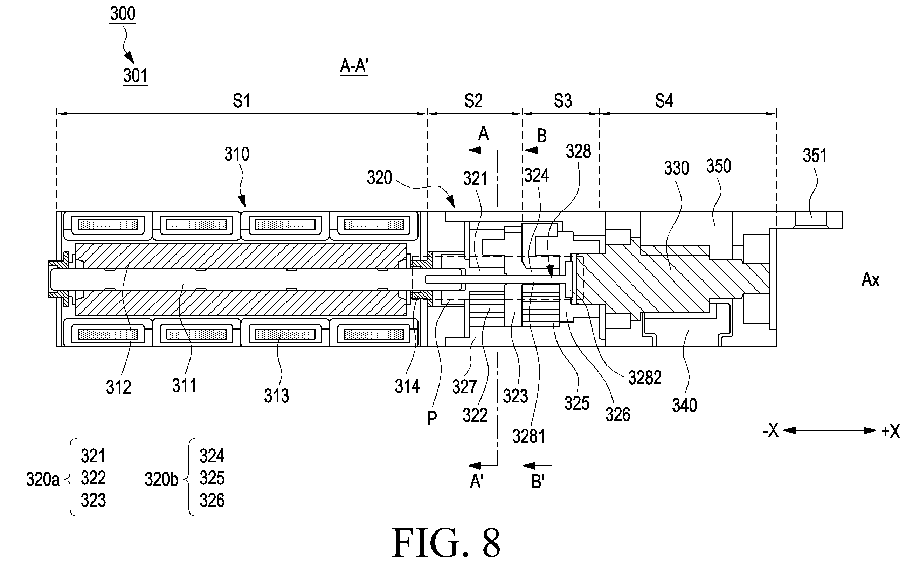

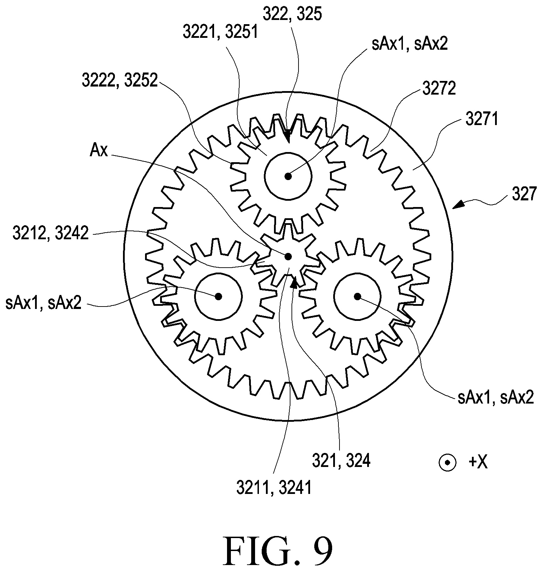

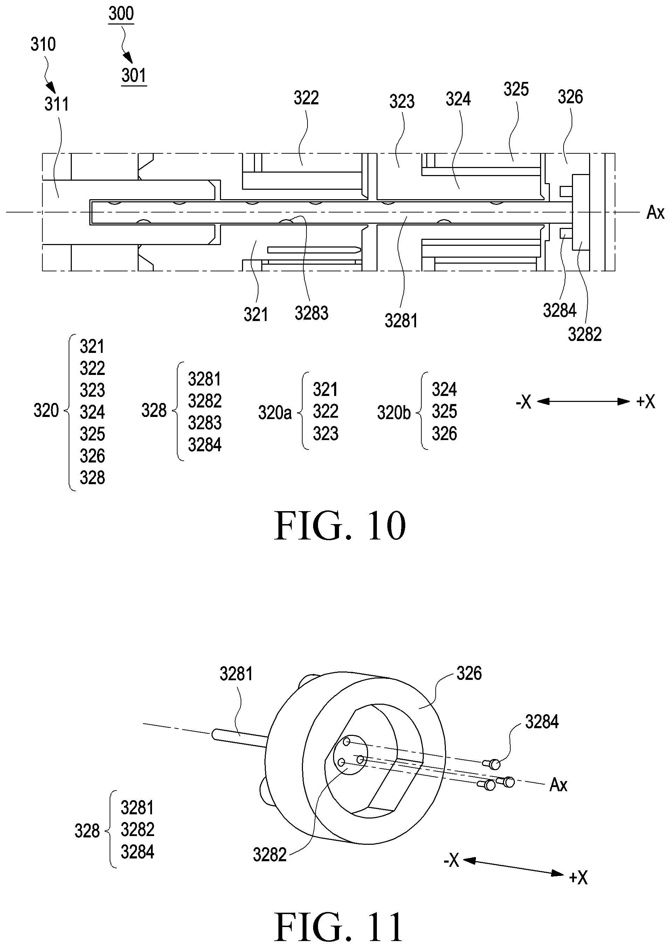

FIG. 8 is a cross-sectional view illustrating a partial configuration of an electronic device according to an embodiment of the disclosure. FIG. 9 is a cross-sectional view illustrating a partial configuration of an electronic device according to an embodiment of the disclosure. FIG. 10 is an enlarged cross-sectional view illustrating a partial configuration of an electronic device according to an embodiment of the disclosure. FIG. 11 is a perspective view illustrating a partial configuration of an electronic device according to an embodiment of the disclosure.

Specifically, FIG. 8 is a cross-sectional view illustrating the driving assembly 301 portion, taken along line A-A' of FIG. 5. FIG. 9 is a view taken along line A-A' or line B-B' of FIG. 8. FIG. 10 is an enlarged cross-sectional view illustrating area P of FIG. 8. FIG. 11 is a perspective view illustrating the second carrier 326 and the center shaft 328.

Hereinafter, the driving assembly 301 according to an embodiment of the disclosure may include a motor 310, a speed reduction gear assembly 320, a driving gear 330, and a rack gear 340, but some thereof may be omitted or additional components are not excluded.

The detailed configuration of the electronic device 300 not described below may be identical or similar to the detailed configuration of the electronic device 101 described with reference to FIGS. 1 to 7.

Hereinafter, the speed reduction gear assembly 320 is described as an example of a two-stage planet gear, but is not limited thereto, and the speed reduction gear assembly 320 may be composed of a one-stage planet gear or may be composed of three or more planet gears.

Hereinafter, the 'first direction' may refer to a direction parallel to the rotation axis Ax and/or a direction from the motor 310 toward the driving gear 330, and may mean the +X direction of FIGS. 8 to 11. The "second direction" is a direction opposite to the first direction (+X direction), and may mean the -X direction of FIGS. 8 to 11. Hereinafter, the 'first rotation direction' may mean a direction of rotation about the rotational axis Ax, the first sub rotational axis sAx1, and/or the second sub rotational axis sAx2. The "second rotation direction" may mean a rotation direction opposite to the first rotation direction.

According to an embodiment, the electronic device 300 may include a driving assembly 301 (e.g., the driving assembly 240 of FIGS. 4 to 7). The driving assembly 301 may be disposed in at least one of a first housing portion (e.g., the first housing portion 201 of FIGS. 6 and 7) or a second housing portion (e.g., the second housing portion 202 of FIGS. 6 and 7). The driving assembly 301 may be configured to provide power for the second housing portion (e.g., the second housing portion 202 of FIGS. 6 and 7) to move with respect to the first housing portion (e.g., the first housing portion 201 of FIGS. 6 and 7).

According to an embodiment, the driving assembly 301 may include a first portion S1, a second portion S2, a third portion S3, and a fourth portion S4. The first portion S1 may generate power. The second portion S2 may receive power from the first portion S1. The second portion S2 may reduce the number of rotations of the power transferred from the first portion S1 and increase the torque. The third portion S3 may receive power from the second portion S2. The third portion S3 may reduce the number of rotations of the power transferred from the second portion S2 and increase the torque. The fourth portion S4 may receive power from the third portion S3. The first portion S1 may be referred to as a "power generating portion". The second portion S2 may be referred to as a "first deceleration portion." The third portion S3 may be referred to as a "second deceleration portion." The fourth portion S4 may be referred to as a "driving portion".

According to an embodiment, the driving assembly 301 may include a motor 310 (e.g., the actuator 240a of FIGS. 4 to 7). The motor 310 may be disposed in the first portion S1. The motor 310 may be configured to generate a rotational force. For example, the motor 310 may generate a force for rotating about the rotational axis Ax. The motor 310 may provide rotational driving force to the speed reduction gear assembly 320.

According to an embodiment, the motor 310 may include a shaft 311. The shaft 311 may extend in the first direction (+X direction) parallel to the rotational axis Ax. A portion of the shaft 311 may be disposed in the motor 310. A portion of the shaft 311 may protrude from the motor 310 toward the speed reduction gear assembly 320. For example, a portion of the shaft 311 may protrude and/or extend from the motor 310 to one side (e.g., the first direction (+X direction)). The shaft 311 may rotate along the rotational axis Ax. For example, the shaft 311 may rotate in the first rotation direction, which is the one rotation direction, around the rotational axis Ax.

According to an embodiment, the motor 310 may include a magnet 312. The magnet 312 may be disposed to surround the shaft 311. According to an embodiment, the motor 310 may include a coil 313. The coil 313 may be disposed to surround the magnet 312. The coil 313 may be configured to receive a current. A battery (e.g., the battery 289 of FIG. 5) may supply power to the coil 313. The coil 313 may receive current to form a magnetic field. The shaft 311 may be rotated by the magnetic force between the magnetic field formed in the coil 313 and the magnet 312. According to an embodiment, the motor 310 may include a bearing 314. The bearing 314 may be disposed to surround the shaft 311. The shaft 311 may be configured to rotate inside the bearing 314.

According to an embodiment, the driving assembly 301 may include a speed reduction gear assembly 320 (e.g., the speed reduction gear assembly 240b of FIGS. 4 to 7). The speed reduction gear assembly 320 may be disposed in the second portion S2 and the third portion S3. The speed reduction gear assembly 320 may be disposed on one side (e.g., the first direction (+X direction) side) of the motor 310. The speed reduction gear assembly 320 may be connected to the motor 310. The speed reduction gear assembly 320 may connect the shaft 311 to the driving gear 330. The speed reduction gear assembly 320 may be configured to adjust the rotational speed (RPM) and torque of the shaft 311 and transfer the same to the driving gear 330. The speed reduction gear assembly 320 may be referred to as a "planet gear assembly," a "deceleration device" and/or a "planet gear device."

According to an embodiment, the speed reduction gear assembly 320 may include a first central gear 321. The first central gear 321 may be disposed in the second portion S2. The first central gear 321 may be connected to the shaft 311. For example, the first central gear 321 may be a portion of the shaft 311. For example, the first central gear 321 may constitute one end of the shaft 311 (e.g., an end facing the first direction (+X direction)). For example, the first central gear 321 may be provided separately from the shaft 311 and fixed to the shaft 311. The first central gear 321 may rotate together with the shaft 311. The first central gear 321 may rotate around the rotational axis Ax. For example, the first central gear 321 may rotate in the first rotation direction around the rotational axis Ax. The first central gear 321 may be formed of a spur gear. The first central gear 321 may be referred to as a "central gear", a "first sun gear", and/or a "sun gear". The first central gear 321 may be a component of the first speed reduction gear assembly 320a. For example, the first speed reduction gear assembly 320a may include a first central gear 321. The first speed reduction gear assembly 320a may be referred to as a "first reduction part" and/or a "first transmission".

According to an embodiment, the first central gear 321 may include a first central gear body 3211. The first central gear body 3211 may be a cylindrical portion of a central area of the first central gear 321.

According to an embodiment, the first central gear 321 may include a first central gear tooth 3212. The first central gear tooth 3212 may be disposed along an outer circumferential surface of the first central gear 321. For example, the first central gear tooth 3212 may be disposed along the outer circumferential surface of the first central gear body 3211. Each of the first central gear tooth 3212 may extend in a first direction (+X direction) and/or a second direction (-X direction). The first central gear tooth 3212 may be engaged with the first peripheral gear tooth 3222.

According to an embodiment, the speed reduction gear assembly 320 may include a first peripheral gear 322. The first peripheral gear 322 may be disposed in the second portion S2. The first peripheral gear 322 may be disposed between the first central gear 321 and the ring gear 327. The first peripheral gear 322 may be engaged with the first central gear 321. The first peripheral gear 322 may be engaged with the ring gear 327. The first peripheral gear 322 may be configured to revolve about the rotational axis Ax around the first central gear 321. For example, the first peripheral gear 322 may revolve in the second rotation direction about the rotational axis Ax. The first peripheral gear 322 may be formed of a spur gear. The first peripheral gear 322 may be referred to as a "peripheral gear", a "first planet gear", and/or a "planet gear". The first peripheral gear 322 may be a component of the first speed reduction gear assembly 320a. For example, the first speed reduction gear assembly 320a may include a first peripheral gear 322.

According to an embodiment, the first peripheral gear 322 may include a plurality of first peripheral gears 322. For example, three first peripheral gears 322 may be provided, and a plurality of first peripheral gears 322 may be radially disposed with respect to the first central gear 321. Each of the first peripheral gears 322 may rotate along the first sub rotational axis sAx1. Each of the first peripheral gears 322 may rotate in an opposite direction to the first central gear 321 about the first sub rotational axis sAx1. For example, each of the first peripheral gears 322 may rotate in the second rotation direction about the first sub rotational axis sAx1. As many first sub rotational axes sAx1 as corresponding to the number of the plurality of first peripheral gears 322 may be formed. The plurality of first sub rotational axes sAx1 may revolve around the rotational axis Ax.

According to an embodiment, the first peripheral gear 322 may include a first peripheral gear body 3221. The first peripheral gear body 3221 may be a cylindrical portion of a central area of the first peripheral gear 322.

According to an embodiment, the first peripheral gear 322 may include a first peripheral gear tooth 3222. The first peripheral gear tooth 3222 may be disposed along an outer circumferential surface of the first peripheral gear 322. For example, the first peripheral gear tooth 3222 may be disposed along the outer circumferential surface of the first peripheral gear body 3221. Each of the first peripheral gear tooth 3222 may extend in a first direction (+X direction) and/or a second direction (-X direction). The first peripheral gear tooth 3222 may be engaged with the first central gear tooth 3212. The first peripheral gear tooth 3222 may be engaged with the ring gear tooth 3272.

According to an embodiment, the speed reduction gear assembly 320 may include a first carrier 323. The first carrier 323 may be disposed in the second portion S2. The first carrier 323 may be disposed on one side (e.g., the first direction (+X direction) side) of the first peripheral gear 322. The first carrier 323 may have a disk shape extending on a plane intersecting the rotational axis Ax. For example, the first carrier 323 may overlap the first sub rotational axis sAx1 of each of the plurality of first peripheral gears 322 in the first direction (+X direction) and/or the second direction (-X direction). The first carrier 323 may be connected to the center of the first peripheral gear 322. For example, the first carrier 323 may be connected to the first peripheral gear 322 at a point on the first sub rotational axis sAx1 of each of the plurality of first peripheral gears 322. The first carrier 323 may be configured to rotate around the rotational axis Ax. For example, the first carrier 323 may rotate around the rotational axis Ax as the first peripheral gear 322 revolves. The first carrier 323 may rotate in the same rotation direction as the rotation direction of the first central gear 321 and/or the first rotation direction as the revolution direction of the first peripheral gear 322. The first carrier 323 may be referred to as a carrier. The first carrier 323 may be a component of the first speed reduction gear assembly 320a. For example, the first speed reduction gear assembly 320a may include a first carrier 323.

According to an embodiment, the number of rotations of the rotational power generated by the motor 310 may be primarily decreased in the first speed reduction gear assembly 320a (e.g., the first central gear 321, the first peripheral gear 322, and the first carrier 323). For example, the first speed reduction gear assembly 320a may have a first reduction gear ratio R1. The first reduction gear ratio R1 may mean a value obtained by dividing the angular velocity of the input end of the first speed reduction gear assembly 320a (e.g., the angular velocity of the first central gear 321) by the angular velocity of the output end of the first speed reduction gear assembly 320a (e.g., the angular velocity of the first carrier 323). The first reduction gear ratio R1 may be a value (e.g., the first reduction gear ratio R1=(the number of ring gear teeth 3272/the number of first central gear teeth 3212)+1) obtained by adding one to a value obtained by dividing the number of ring gear teeth 3272 by the number of first central gear teeth 3212. The first reduction gear ratio R1 may have a value larger than 1. When the first reduction gear ratio R1 is larger than 1, it may mean that the rotation speed of the first carrier 323 is lower than the rotation speed of the first central gear 321.

According to an embodiment, the torque of the rotational power generated by the motor 310 may be primarily increased in the first speed reduction gear assembly 320a. For example, the second torque T2 generated by the rotation of the first carrier 323 may be a value obtained by multiplying the first torque T1 generated by the rotation of the first central gear 321 by the first reduction gear ratio R1.

According to an embodiment, the speed reduction gear assembly 320 may include a second central gear 324. The second central gear 324 may be disposed in the third portion S3. The second central gear 324 may be disposed on one side (e.g., the first direction (+X direction) side) of the first carrier 323. For example, the second central gear 324 may be a portion of the first carrier 323. For example, the second central gear 324 may be a portion protruding in the first direction (+X direction) from a portion through which the rotational axis Ax of the disk-shaped first carrier 323 passes. For example, the second central gear 324 may be provided separately from the first carrier 323 and fixed to the first carrier 323. The second central gear 324 may be configured to, together with the first carrier 323, rotate around the rotational axis Ax. The second central gear 324 may rotate around the rotational axis Ax. For example, the second central gear 324 may rotate in the first rotation direction around the rotational axis Ax. The second central gear 324 may be referred to as a "central gear", a "second sun gear", and/or a "sun gear". The second central gear 324 may be a component of the second speed reduction gear assembly 320b. For example, the second speed reduction gear assembly 320b may include a second central gear 324. The second speed reduction gear assembly 320b may be referred to as a "second reduction part" and/or a "second transmission".

According to an embodiment, the second central gear 324 may include a second central gear body 3241. The second central gear body 3241 may be a cylindrical portion of a central area of the second central gear 324.

According to an embodiment, the second central gear 324 may include a second central gear tooth 3242. The second central gear tooth 3242 may be disposed along the outer circumferential surface of the second central gear 324. For example, the second central gear tooth 3242 may be disposed along an outer circumferential surface of the second central gear body 3241 . Each of the second central gear teeth 3242 may extend in a first direction (+X direction) and/or a second direction (-X direction). The second central gear tooth 3242 may be engaged with the second peripheral gear tooth 3252.

According to an embodiment, the speed reduction gear assembly 320 may include a second peripheral gear 325. The second peripheral gear 325 may be disposed in the third portion S3. The second peripheral gear 325 may be disposed between the second central gear 324 and the ring gear 327. The second peripheral gear 325 may be engaged with the second central gear 324. The second peripheral gear 325 may be engaged with the ring gear 327. The second peripheral gear 325 may be engaged with the second central gear 324. The second peripheral gear 325 may be configured to revolve around the rotational axis Ax around the second central gear 324. For example, the second peripheral gear 325 may revolve in the second rotation direction around the rotational axis Ax. The second peripheral gear 325 may be formed of a spur gear. The second peripheral gear 325 may be referred to as a "peripheral gear", a "second planet gear", and/or a "planet gear". The second peripheral gear 325 may be a component of the second speed reduction gear assembly 320b. For example, the second speed reduction gear assembly 320b may include a second peripheral gear 325.

According to an embodiment, the second peripheral gear 325 may include a plurality of second peripheral gears 325. For example, three second peripheral gears 325 may be provided, and the plurality of second peripheral gears 325 may be radially disposed with respect to the second central gear 324. Each of the second peripheral gears 325 may rotate along the second sub rotational axis sAx2. Each of the second peripheral gears 325 may rotate in an opposite direction to the second central gear 324. For example, each of the second peripheral gears 325 may rotate in the second rotation direction around the second sub rotational axis sAx2. As many second sub rotational axes sAx2 as corresponding to the number of the plurality of second peripheral gears 325 may be formed. The plurality of second sub rotational axes sAx2 may revolve around the rotational axis Ax.

According to an embodiment, the second peripheral gear 325 may include a second peripheral gear body 3251. The second peripheral gear body 3251 may be a cylindrical portion of a central area of the second peripheral gear 325.

According to an embodiment, the second peripheral gear 325 may include a second peripheral gear tooth 3252. The second peripheral gear tooth 3252 may be disposed along the outer circumferential surface of the second peripheral gear 325. For example, the second peripheral gear tooth 3252 may be disposed along the outer circumferential surface of the second peripheral gear body 3251. Each of the second peripheral gear teeth 3252 may extend in a first direction (+X direction) and/or a second direction (-X direction). The second peripheral gear tooth 3252 may be engaged with the second central gear tooth 3242. The second peripheral gear tooth 3252 may be engaged with the ring gear tooth 3272.

According to an embodiment, the speed reduction gear assembly 320 may include a second carrier 326. The second carrier 326 may be disposed in the third portion S3. The second carrier 326 may be disposed on one side (e.g., the first direction (+X direction) side) of the second peripheral gear 325. The second carrier 326 may have a disk shape extending on a plane intersecting the rotational axis Ax. For example, the second carrier 326 may overlap the second sub rotational axis sAx2 of each of the plurality of second peripheral gears 325 in the first direction (+X direction) and/or the second direction (-X direction). The second carrier 326 may be connected to the center of the second peripheral gear 325. For example, the second carrier 326 may be connected to the second peripheral gear 325 at a point of the second sub rotational axis sAx2 of each of the plurality of second peripheral gears 325. The second carrier 326 may be configured to rotate around the rotational axis Ax. For example, as the second peripheral gear 325 revolves, the second carrier 326 may rotate around the rotational axis Ax. The second carrier 326 may rotate in the same first rotation direction as the rotation direction of the second central gear 324 and/or the revolution direction of the second peripheral gear 325. The second carrier 326 may be referred to as a "carrier." The second carrier 326 may be a component of the second speed reduction gear assembly 320b. For example, the second speed reduction gear assembly 320b may include a second carrier 326.

According to an embodiment, the number of rotations at the output end (e.g., the first carrier 323) of the first speed reduction gear assembly 320a may be decreased secondarily in the second speed reduction gear assembly 320b (e.g., the second central gear 324, the second peripheral gear 325, and the second carrier 326). For example, the second speed reduction gear assembly 320b may have a second reduction gear ratio R2. The second reduction gear ratio R2 may mean a value obtained by dividing the angular velocity of the input end of the second speed reduction gear assembly 320b (e.g., the angular velocity of the second central gear 324) by the angular velocity of the output end of the second speed reduction gear assembly 320b (e.g., the angular velocity of the second carrier 326). The second reduction gear ratio R2 may be a value (e.g., the second reduction gear ratio R2=(the number of ring gear teeth 3272/the number of second central gear teeth 3242)+1) obtained by adding one to a value obtained by dividing the number of ring gear teeth 3272 by the number of second central gear teeth 3242. The second reduction gear ratio R2 may have a value larger than 1. When the second reduction gear ratio R2 is larger than 1, it may mean that the rotation speed of the second carrier 326 is lower than the rotation speed of the second central gear 324.

According to an embodiment, the torque generated from the output end (e.g., the first carrier 323) of the first speed reduction gear assembly 320a may increase in the second speed reduction gear assembly 320b. For example, the third torque T3 generated by the rotation of the second carrier 326 may be a value obtained by multiplying the second torque T2 generated by the rotation of the second central gear 324 by the second reduction gear ratio R2.

According to an embodiment, the speed reduction gear assembly 320 may include a ring gear 327. The ring gear 327 may be disposed in the second portion S2 and the third portion S3. The ring gear 327 may be formed in a ring shape with respect to the rotational axis Ax. For example, the ring gear 327 may have a cylindrical shape extending in a first direction (+X direction) and/or a second direction (-X direction). The ring gear 327 may be configured to surround the first peripheral gear 322. The ring gear 327 may be configured to surround the second peripheral gear 325. The ring gear 327 may be engaged with the first peripheral gear 322. The ring gear 327 may be engaged with the second peripheral gear 325. The ring gear 327 may be configured as an internal gear. In an embodiment, the ring gear 327 may be provided corresponding to each of the first speed reduction gear assembly 320a and the second speed reduction gear assembly 320b. For example, the ring gear 327 may include a first ring gear engaged with the first peripheral gear 322 and a second ring gear 327 engaged with the second peripheral gear 325.

According to an embodiment, the ring gear 327 may include a ring gear body 3271. The ring gear body 3271 may have a cylindrical shape. The ring gear 327 may include a ring gear tooth 3272. The ring gear tooth 3272 may be disposed along an inner circumferential surface of the ring gear 327 (e.g., the ring gear body 3271). Each ring gear tooth 3272 may extend in a first direction (+X direction) and/or a second direction (-X direction). The ring gear tooth 3272 may be engaged with the first peripheral gear tooth 3222. The ring gear tooth 3272 may be engaged with the second peripheral gear tooth 3252.

According to an embodiment, the driving assembly 301 may include a driving gear 330 (e.g., the gear 240c of FIG. 4). The driving gear 330 may be disposed in the fourth portion S4. The driving gear 330 may be disposed on one side (e.g., the first direction (+X direction) side) of the speed reduction gear assembly 320. The driving gear 330 may be disposed on one side (e.g., the first direction (+X direction) side) of the second carrier 326. The driving gear 330 may be connected to the second carrier 326. The driving gear 330, together with the second carrier 326, may rotate in the first rotation direction around the rotational axis Ax. The driving gear 330 may be engaged with the rack gear 340. The driving gear 330 may be referred to as a pinion gear. For example, the driving gear 330 may be a pinion gear operable by being engaged with the rack gear 340.

According to an embodiment, the driving assembly 301 may include a rack gear 340 (e.g., the rack gear 240d of FIGS. 4 to 7). The rack gear 340 may be disposed in the fourth portion S4. The rack gear 340 may extend in a direction intersecting the first direction (+X direction) and/or the second direction (-X direction). For example, the rack gear 340 may extend in the direction in which the second housing portion (e.g., the second housing portion 202 of FIGS. 6 and 7) moves with respect to the first housing portion (e.g., the first housing portion 201 of FIGS. 6 and 7). The rack gear 340 may be engaged with the driving gear 330. The rack gear 340 may be fixed to the first housing portion (e.g., the first housing portion 201 of FIGS. 6 and 7).

According to an embodiment, the driving assembly 301 may include a supporting member 350. The supporting member 350 may surround at least a portion of the driving gear 330. The supporting member 350 may be fixed to the second housing portion (e.g., the second housing portion 202 of FIGS. 6 and 7). The supporting member 350 may include a coupling hole 351. The coupling hole 351 may be formed to be open in the supporting member 350. The supporting member 350 may be fixed to the second housing portion (e.g., the second housing portion 202 of FIGS. 6 and 7) by fixing the coupling member (not illustrated) penetrating the coupling hole 351 to the second housing portion (e.g., the second housing portion 202 of FIGS. 6 and 7).

According to an embodiment, referring to FIGS. 10 and 11, the speed reduction gear assembly 320 may include a center shaft 328. The center shaft 328 may extend along the rotational axis Ax. The center shaft 328 may be configured to penetrate the shaft 311, the first central gear 321, the first carrier 323, and the second central gear 324. The center shaft 328 may be fixed to the second carrier 326. The center shaft 328 may be configured to suppress the first central gear 321, the first peripheral gear 322, the first carrier 323, the second central gear 324, and the second peripheral gear 325 from being eccentric with respect to the shaft 311.

According to an embodiment, the center shaft 328 may be fixed to the second carrier 326. The center shaft 328 may rotate at an angular velocity substantially equal to that of the second carrier 326. The center shaft 328 may rotate at an angular velocity different from that of the shaft 311, the first central gear 321, the first carrier 323, and the second central gear 324.

According to an embodiment, a gap may be formed between the center shaft 328 (e.g., the rod 3281) and the first shaft 311, the first central gear 321, the first carrier 323, and the second central gear 324. For example, the center shaft 328 may not tightly contact the first shaft 311. For example, the center shaft 328 may not tightly contact the first central gear 321. For example, the center shaft 328 may not tightly contact the first carrier 323. For example, the center shaft 328 may not tightly contact the second central gear 324. Accordingly, different angular velocities between the center shaft 328 and the shaft 311, the first central gear 321, the first carrier 323, and the second central gear 324 may be implemented.

According to an embodiment, the center shaft 328 may include a rod 3281. The rod 3281 may extend in the direction (e.g., the first direction (+X direction) and/or the second direction (-X direction) parallel to the rotational axis Ax. The rod 3281 may pass through a portion of the shaft 311 (e.g., an end area facing the first direction (+X direction) of the shaft 311), the first central gear 321, the first carrier 323, the second central gear 324, and the second carrier 326.

According to an embodiment, the center shaft 328 may include a flange portion 3282. The flange portion 3282 may extend radially outward from the rod 3281. The flange portion 3282 may be disposed at an end portion of the rod 3281 facing the first direction (+X direction). The flange portion 3282 may be disposed on one side (e.g., the first direction (+X direction) side) of the second carrier 326. The flange portion 3282 may be fixed to the second carrier 326. For example, as the coupling member 3284 passes through the flange portion 3282 and is coupled to the second carrier 326, the flange portion 328 (or the center shaft 328) may be fixed to the second carrier 326. As described above, the center shaft 328 may be easily disassembled and reassembled through the structure of fixing the center shaft 328 to the second carrier 326 using the coupling member 3284. In an embodiment, the coupling member 3284 may not be provided. For example, the center shaft 328 may be fixed to the second carrier 326 by protruding toward the second carrier 326 in the flange portion 328 and being coupled to the second carrier 326. In an embodiment, the center shaft 328 may be fixed to the second carrier 326 through a separate mechanical coupling mechanism between the flange portion 3282 and the second carrier 326.

According to an embodiment, the center shaft 328 may include a plurality of recesses 3283. The plurality of recesses 3283 may be formed in the outer circumferential surface of the rod 3281. The plurality of recesses 3283 may be formed in a portion overlapping the shaft 311, the first central gear 321, the first carrier 323, and/or the second central gear 324. The plurality of recesses 3283 may be configured to receive a lubricant.

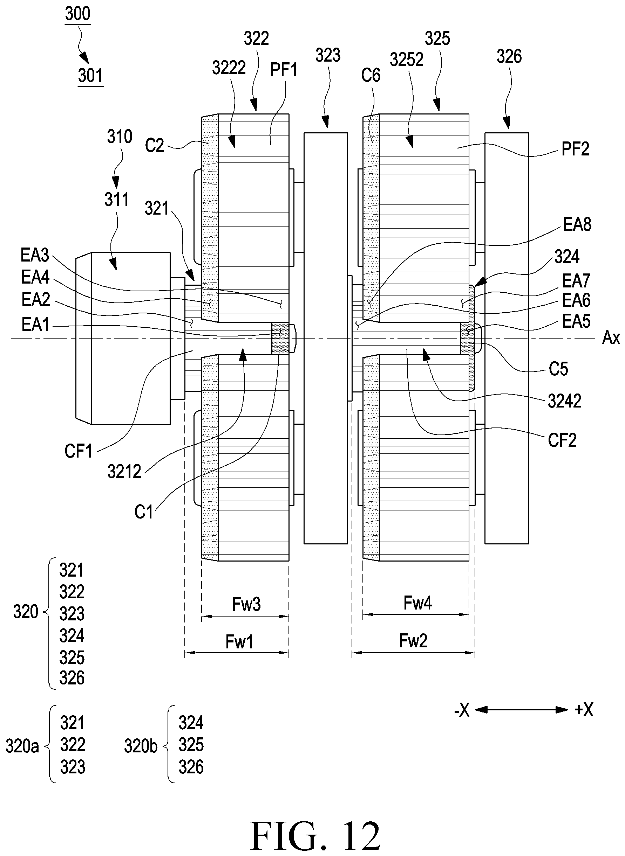

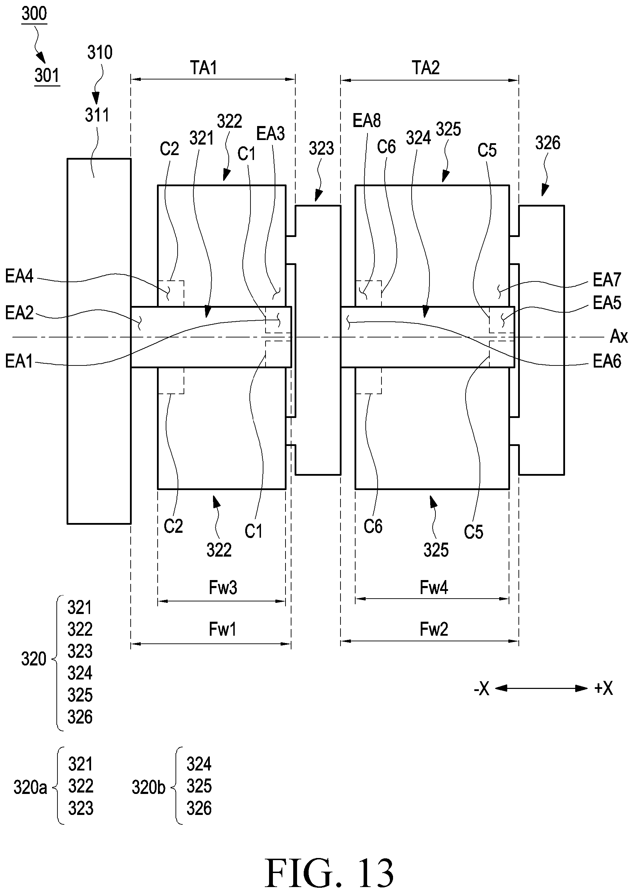

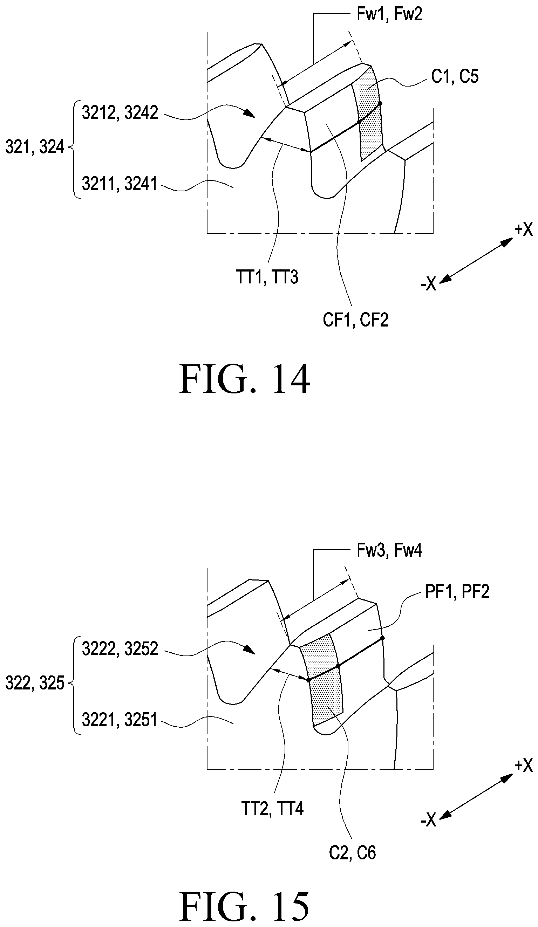

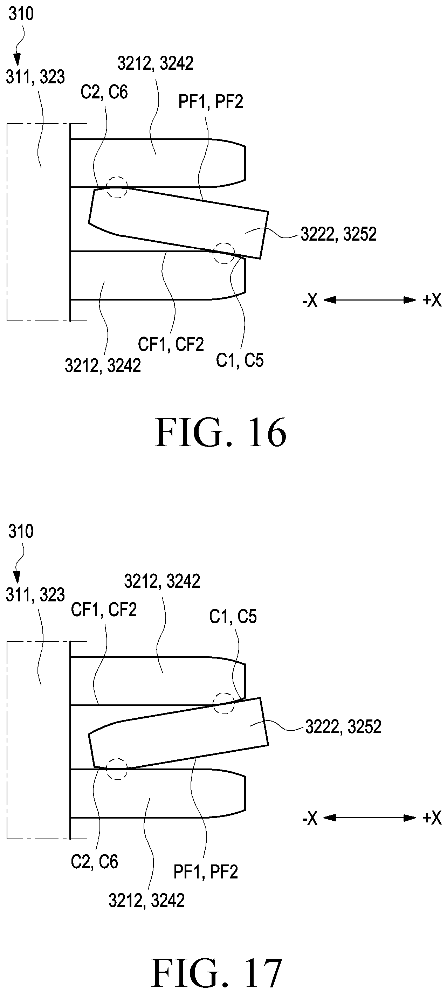

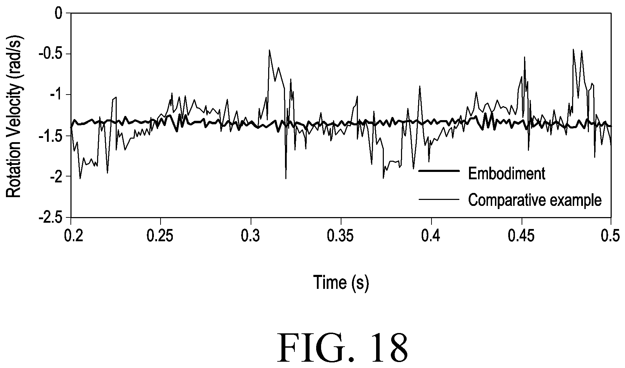

FIG. 12 is a side view illustrating a partial configuration of an electronic device according to an embodiment of the disclosure. FIG. 13 is a view briefly illustrating a cross section of a partial configuration of an electronic device according to an embodiment of the disclosure. FIG. 14 is an enlarged perspective view illustrating a partial configuration of an electronic device according to an embodiment of the disclosure. FIG. 15 is an enlarged perspective view illustrating a partial configuration of an electronic device according to an embodiment of the disclosure; FIG. 16 is a view briefly illustrating an operational process of a partial configuration of an electronic device according to an embodiment of the disclosure. FIG. 17 is a view briefly illustrating an operational process of a partial configuration of an electronic device according to an embodiment of the disclosure; FIG. 18 is a graph illustrating comparison between an electronic device according to an embodiment of the disclosure and a comparative example.

Specifically, FIG. 12 is an enlarged side view illustrating the motor 310, the first central gear 321, the first peripheral gear 322, the first carrier 323, the second central gear 324, and the second peripheral gear 325. FIG. 13 is the schematic diagram illustrating the motor 310, the first central gear 321, the first peripheral gear 322, the first carrier 323, the second central gear 324, the second peripheral gear 325, and the second carrier 326. FIG. 14 is an enlarged view illustrating the first central gear tooth 3212 and/or the second central gear tooth 3242. FIG. 15 is an enlarged view illustrating the first peripheral gear tooth 3222 and/or the second peripheral gear tooth 3252. FIG. 16 illustrates a case where the motor 310 provides a rotational force for rotating in the first rotation direction, illustrating an arrangement relationship between the first central gear tooth 3212 and the first peripheral gear tooth 3222 and an arrangement relationship between the second central gear tooth 32242 and the second peripheral gear tooth 3252. FIG. 17 illustrates a case where the motor 310 provides rotational force in a second rotation direction opposite to the first rotation direction, illustrating an arrangement relationship between the first central gear tooth 3212 and the first peripheral gear tooth 3222 and an arrangement relationship between the second central gear tooth 32242 and the second peripheral gear tooth 3252. FIG. 18 is a graph illustrating changes in angular velocity over time of the first peripheral gear 322 when the first curved portion C1 is formed on the first central gear tooth surface CF1, and the second curved portion C2 is formed on the first peripheral gear tooth surface PF1 (e.g., embodiment), and when the first curved portion C1 and the second curved portion C2 are not formed (e.g., comparative example).

The detailed configuration of the driving assembly 301 not described below may be identical or similar to the detailed configuration of the driving assembly 240 described with reference to FIGS. 4 to 7 and/or the detailed configuration of the driving assembly 301 described with reference to FIGS. 8 to 11.

According to an embodiment, the first central gear tooth 3212 may include a first central gear tooth surface CF1. The first central gear tooth surface CF1 may be a surface of the first central gear tooth 3212 that faces the first peripheral gear tooth 3222. The first central gear tooth surface CF1 may extend in a first direction (+X direction) and/or a second direction (-X direction). The first central gear tooth surface CF1 may constitute two opposite side surfaces of the first central gear tooth 3212. For example, the first central gear tooth surface CF1 may be disposed on two opposite side surfaces of the first central gear tooth 3212. The first central gear tooth surface CF1 may be referred to as a "central gear tooth surface" and/or a "tooth surface".

According to an embodiment, the tooth surface of the first central gear 321 (e.g., the first central gear tooth surface CF1) may include a first end area EA1 and a second end area EA2, which are two opposite end areas of the tooth surface (e.g., the first central gear tooth surface CF1) of the first central gear 321, and a curve may be formed in the first end area EA1 in a direction in which the tooth thickness TT1 of the first central gear tooth 3212 decreases. For example, the first central gear tooth surface CF1 may be curved so that the tooth thickness TT1 of the first central gear tooth 3212 in either the first direction (+X direction) end area or the second direction (-X direction) end area of the first central gear tooth surface CF1 decreases away from the center in the direction parallel to the rotational axis Ax of the first central gear tooth 3212 (e.g., the first direction (+X direction) and/or the second direction (-X direction)). Accordingly, when an eccentricity occurs between the first central gear 321 and the first peripheral gear 322 so that the end portion of the first central gear tooth 3212 contacts the first peripheral gear tooth surface PF1, the curved portion of the first central gear tooth 3212 contacts the first peripheral gear tooth surface PF1, so that the stress concentration on the first peripheral gear tooth 3222 may be prevented or alleviated. For example, as the first central gear tooth 3212 moves relative to the first peripheral gear tooth 3222, the part of the curved portion of the first central gear tooth 3212 which contacts the first peripheral gear tooth surface PF1 may change, so that the area of the first peripheral gear tooth 3222 which experiences a pressure will also change. As such stress is distributed across at least part of the first peripheral gear tooth surface PF1. This is in contrast to an embodiment which lacks the curve, in which a corner of a first central gear tooth may contact substantially the same point on a first peripheral gear tooth throughout an interaction. In addition, since the part of the first central gear tooth 3212 which contacts the first peripheral gear tooth surface PF1 is curved, a contact area will tend to be larger than it would be for an uncurved embodiment. The curved portion of the first central gear tooth surface CF1 may be referred to as a first curved portion C1. The first curved portion C1 may be understood as a portion formed to be rounded in any one of two opposite end areas of the first central gear tooth surface CF1. The first curved portion C1 may be disposed on each of the first central gear tooth surfaces CF1 constituting two opposite side surfaces of the first central gear tooth 3212. The first curved portion C1 may be referred to as a "curved portion," "curve surface," and/or "curved surface."

According to an embodiment, the first peripheral gear tooth 3222 may include a first peripheral gear tooth surface PF1. The first peripheral gear tooth surface PF1 may be a surface of the first peripheral gear tooth 3222 that faces the first central gear tooth 3212. The first peripheral gear tooth surface PF1 may extend in a first direction (+X direction) and/or a second direction (-X direction). The first peripheral gear tooth surface PF1 may form two opposite side surfaces of the first peripheral gear tooth 3222. For example, the first peripheral gear tooth surface PF1 may be disposed on two opposite side surfaces of the first peripheral gear tooth 3222. The first peripheral gear tooth surface PF1 may be referred to as a "peripheral gear tooth surface" and/or "tooth surface".

According to an embodiment, the tooth surface (e.g., the first peripheral gear tooth surface PF1) of the first peripheral gear 322 includes a third end area EA3 corresponding to the first end area EA1 and a fourth end area EA4 corresponding to the second end area EA2, and a curve may be formed in the fourth end area EA4 in a direction in which the tooth thickness TT2 of the first peripheral gear tooth 3222 decreases. For example, the first peripheral gear tooth surface PF1 may be curved so that the tooth thickness TT2 of the first peripheral gear tooth 3222 in the end area opposite to the curved portion of the first central gear tooth surface CF1, out of the first direction (+X direction) end area of the first peripheral gear tooth surface PF1 or the second direction (-X direction) end area of the first peripheral gear tooth surface PF1, decreases away from the center in the direction parallel to the rotational axis Ax of the first peripheral gear tooth 3222 (e.g., the first direction (+X direction) and/or the second direction (-X direction)). Accordingly, when an eccentricity occurs between the first central gear 321 and the first peripheral gear 322 so that the end portion of the first peripheral gear tooth 3222 contacts the first central gear tooth surface CF1, the curved portion of the first peripheral gear tooth 3222 contacts the first central gear tooth surface CF1, so that the stress concentration on the first central gear tooth 3212 may be prevented or alleviated. For example, as the first peripheral gear tooth 3222 moves relative to the first central gear tooth 3212, the part of the curved portion of the first peripheral gear 3222 tooth which contacts the first central gear tooth surface CF1 may change, so that the area of the first central gear tooth 3212 which experiences a pressure will also change. As such stress is distributed across at least part of the first central gear tooth surface CF1. This is in contrast to an embodiment which lacks the curve, in which a corner of a first peripheral gear tooth may contact substantially the same point on a first central gear tooth throughout an interaction. In addition, since the part of the first peripheral gear tooth 3222 which contacts the first central gear tooth surface CF1 is curved, a contact area will tend to be larger than it would be for an uncurved embodiment The curved portion of the first peripheral gear tooth surface PF1 may be referred to as a second curved portion C2. The second curved portion C2 may be disposed on each of the first peripheral gear tooth surfaces PF1 constituting two opposite side surfaces of the first peripheral gear tooth 3222. The second curved portion C2 may be referred to as a curved portion, a curve surface, and/or a curved surface.

According to an embodiment, the first curved portion C1 and the second curved portion C2 may be disposed in at least opposite end areas. For example, referring to FIGS. 16 and 17, when the first peripheral gear 322 is misaligned with respect to the first central gear 321 (e.g., when the eccentricity occurs) due to the eccentricity between the first central gear 321 and the first peripheral gear 322 which is caused by tolerance or wear, it may be understood that the curved portion (e.g., the first curved portion C1 and the second curved portion C2) is formed at each point where the first central gear tooth 3212 and the first peripheral gear tooth 3222 contact each other. Accordingly, as an eccentricity occurs between the first central gear 321 and the first peripheral gear 322, a stress concentration on at least one of the first central gear tooth 3212 and the first peripheral gear tooth 3222 may be suppressed, wear, damage, deformation and/or noise of the first central gear 321 and/or the first peripheral gear 322 may be prevented or alleviated, and stability and/or efficiency of the speed reduction gear assembly 320 may be enhanced. For example, when the first curved portion C1 and/or the second curved portion C2 is formed, the stress concentration acting on the first central gear tooth 3212 and/or the first peripheral gear tooth 3222 may be decreased by about 15% compared to when the first curved portion C1 and/or the second curved portion C2 is not formed.

According to an embodiment, the first end area EA1 may be an end area far from the motor 310 in the tooth surface (e.g., the first central gear tooth surface CF1) of the first central gear 321, and the second end area EA2 may be an end area close to the motor 310 in the tooth surface (e.g., the first central gear tooth surface CF1) of the first central gear 321. According to an embodiment, the first curved portion C1 is formed in the first end area EA1, and may be curved so that the tooth thickness TT1 of the first central gear tooth 3212 decreases away from the motor 310. According to an embodiment, the third end area EA3 may be an end area far from the motor 310 in the tooth surface (e.g., the first peripheral gear tooth surface PF1) of the first peripheral gear 322, and the fourth end area EA4 may be an end area close to the motor 310 in the tooth surface (e.g., the first peripheral gear tooth surface PF1) of the first peripheral gear 322. According to an embodiment, the second curved portion C2 is formed in the fourth end area EA4, and may be curved so that the tooth thickness TT2 of the first peripheral gear tooth 3222 decreases toward the motor 310. For example, the first curved portion C1 may be disposed in the end area of the first central gear tooth surface CF1 in the first direction (+X direction), and the second curved portion C2 may be disposed in the end area of the first peripheral gear tooth surface PF1 in the second direction (-X direction). The first curved portion C1 may be curved so that the tooth thickness TT1 of the first central gear tooth 3212 decreases in the first direction (+X direction). The second curved portion C2 may be curved so that the tooth thickness TT2 of the first peripheral gear tooth 3222 decreases in the second direction (-X direction). For example, when the first peripheral gear 322 moves in the first tolerance area TA1 (e.g., the first tolerance area TA1 of FIG. 13), it may be difficult for the second direction (-X direction) end portion of the first central gear tooth 3212 to contact the first peripheral gear tooth surface PF1 due to a limit to the movement range of the first peripheral gear 322 in the second direction (-X direction). Therefore, as illustrated in FIGS. 16 and 17, the first curved portion C1 is selectively disposed only in the end area of the first central gear tooth surface CF1 in the first direction (+X direction), and the second curved portion C2 is selectively disposed only in the end area of the first peripheral gear tooth surface PF1 in the second direction (-X direction), thereby enhancing the manufacturing efficiency of the gear (e.g., the first central gear 321 and/or the first peripheral gear 322) where the curved portion is formed and reducing the manufacturing costs.

According to an embodiment, the first curved portion C1 may be configured to overlap the end portion of the first peripheral gear 322 far from the motor 310, in a radial direction from the rotational axis Ax when the first peripheral gear 322 moves toward the motor 310 as much as possible. For example, the first curved portion C1 may be configured to overlap the first direction (+X direction) end portion of the first peripheral gear 322 in a radial direction from the rotational axis Ax when the first peripheral gear 322 moves as much as possible in the second direction (-X direction). For example, referring to FIG. 13, the first peripheral gear 322 may move in the first tolerance area TA1 (e.g., the first tolerance area TA1 of FIG. 13). When the first peripheral gear 322 moves as much as possible in the second direction (-X direction), the end portion of the first peripheral gear 322 in the first direction (+X direction) and the first curved portion C1 formed on the first central gear tooth surface CF1 overlap each other in the radial direction (e.g., a direction perpendicular to the first direction (+X direction) and/or the second direction (-X direction)), so that despite the movement of the first peripheral gear 322, the end portion of the first peripheral gear tooth 3222 may contact the first curved portion C1, preventing or alleviating stress concentration between the first peripheral gear tooth 3222 and the first central gear tooth 3212.

FIG. 18 illustrates changes in angular velocity over time of the first peripheral gear 322 when the first curved portion C1 is formed on the first central gear tooth surface CF1, and the second curved portion C2 is formed on the first peripheral gear tooth surface PF1 (e.g., the embodiment of FIG. 18), and when the first curved portion C1 and the second curved portion C2 are not formed (e.g., the comparative example of FIG. 18). Referring to FIG. 18, in the comparative example, the angular velocity of the first peripheral gear 322 varies irregularly over time, while in the embodiment, the angular velocity of the first peripheral gear 322 remains relatively uniform over time. Accordingly, it may be identified that as the first curved portion C1 and the second curved portion C2 are formed on the first central gear tooth surface CF1 and the first peripheral gear tooth surface PF1, respectively, stress concentration on the first central gear tooth 3212 and the second central gear tooth 32242 is prevented or alleviated, mitigating deformation and/or abrasion of the teeth, and thus leading to stable torque transmission between the first central gear 321 and the first peripheral gear 322, and hence enhancing the operational stability and/or efficiency of the speed reduction gear assembly 320.

According to an embodiment, the second central gear tooth 3242 may include a second central gear tooth surface CF2. The second central gear tooth surface CF2 may be a surface of the second central gear tooth 3242 that faces the second peripheral gear tooth 3252. The second central gear tooth surface CF2 may extend in a first direction (+X direction) and/or a second direction (-X direction). The second central gear tooth surface CF2 may constitute two opposite side surfaces of the second central gear tooth 3242. For example, the second central gear tooth surface CF2 may be disposed on two opposite side surfaces of the second central gear tooth 3242. The second central gear tooth surface CF2 may be referred to as a "central gear tooth surface" and/or "tooth surface".

According to an embodiment, the second central gear tooth surface CF2 may include a fifth end area EA5 and a sixth end area EA6, which are two opposite end areas of the tooth surface (e.g., the second central gear tooth surface CF2) of the second central gear 324, and a curve may be formed in the fifth end area EA5 in a direction in which the tooth thickness TT3 of the second central gear tooth 3242 decreases. For example, the second central gear tooth surface CF2 may be curved so that the tooth thickness TT3 of the second central gear tooth 3242 in either the first direction (+X direction) end area or the second direction (-X direction) end area of the second central gear tooth surface CF2 decreases away from the center in the direction parallel to the rotational axis Ax of the second central gear tooth 3242 (e.g., the first direction (+X direction) and/or the second direction (-X direction)). Accordingly, when an eccentricity occurs between the second central gear 324 and the second peripheral gear 325 so that the end portion of the second central gear tooth 3242 contacts the second peripheral gear tooth surface PF2, the curved portion of the second central gear tooth 3242 contacts the second peripheral gear tooth surface PF2, so that the stress concentration on the second peripheral gear tooth 3242 may be prevented or alleviated. The curved portion of the second central gear tooth surface CF2 may be referred to as a fifth curved portion C5. The fifth curved portion C5 may be understood as a portion formed to be rounded in any one of two opposite end areas of the second central gear tooth surface CF2. The fifth curved portion C5 may be disposed on each of the second central gear teeth surface CF1 constituting two opposite side surfaces of the second central gear tooth 3242. The fifth curved portion C5 may be referred to as a curved portion, a curve surface, and/or a curved surface.

According to an embodiment, the second peripheral gear tooth 3252 may include a second peripheral gear tooth surface PF2. The second peripheral gear tooth surface PF2 may be a surface of the second peripheral gear tooth 3252 that faces the second central gear tooth 3242. The second peripheral gear tooth surface PF2 may extend in a first direction (+X direction) and/or a second direction (-X direction). The second peripheral gear tooth surface PF2 may form two opposite side surfaces of the second peripheral gear tooth 3252. For example, the second peripheral gear tooth surface PF2 may be disposed on two opposite side surfaces of the second central gear tooth 3242. The second peripheral gear tooth surface PF2 may be referred to as a "peripheral gear tooth surface" and/or "tooth surface".

According to an embodiment, the tooth surface (e.g., the second peripheral gear tooth surface PF2) of the second peripheral gear 325 includes a seventh end area EA7 corresponding to the fifth end area EA5 and an eighth end area EA8 corresponding to the sixth end area EA6, and a curve may be formed in the eighth end area EA8 in a direction in which the tooth thickness TT4 of the second peripheral gear tooth 3252 decreases. For example, the second peripheral gear tooth surface PF2 may be curved so that the tooth thickness TT4 of the second peripheral gear tooth 3252 in the end area opposite to the curved portion of the second central gear tooth surface CF2, out of the first direction (+X direction) end area of the second peripheral gear tooth surface PF2 or the second direction (-X direction) end area of the second peripheral gear tooth surface PF2, decreases away from the center in the direction parallel to the rotational axis Ax of the second peripheral gear tooth 3252 (e.g., the first direction (+X direction) and/or the second direction (-X direction)). Accordingly, when an eccentricity occurs between the second central gear 324 and the second peripheral gear 325 so that the end portion of the second peripheral gear tooth 3252 contacts the second central gear tooth surface CF2, the curved portion of the second peripheral gear tooth 3252 contacts the second central gear tooth surface CF2, so that the stress concentration on the second central gear tooth 3242 may be prevented or alleviated. The curved portion of the second peripheral gear tooth surface PF2 may be referred to as a sixth curved portion C6. The sixth curved portion C6 may be disposed on each of the second peripheral gear tooth surfaces PF2 constituting two opposite side surfaces of the second peripheral gear tooth 3252. The sixth curved portion C6 may be referred to as a curved portion, a curve surface, and/or a curved surface.

According to an embodiment, the fifth curved portion C5 and the sixth curved portion C6 may be disposed in at least opposite end areas. For example, referring to FIGS. 16 and 17, when the second peripheral gear 325 is misaligned with respect to the second central gear 324 (e.g., when the eccentricity occurs) due to the eccentricity between the second central gear 324 and the second peripheral gear 325 which is caused by tolerance or wear, it may be understood that the curved portion (e.g., the fifth curved portion C5 and the sixth curved portion C6) is formed at each point where the second central gear tooth 3242 and the second peripheral gear tooth 3252 contact each other. Accordingly, as an eccentricity occurs between the second central gear 324 and the second peripheral gear 325, a stress concentration on at least one of the second central gear tooth 3242 or the second peripheral gear tooth 3252 may be suppressed, wear, damage, deformation and/or noise of the second central gear 324 and/or the second peripheral gear 325 may be prevented or alleviated, and stability and/or efficiency of the speed reduction gear assembly 320 may be enhanced. For example, when the fifth curved portion C5 and/or the sixth curved portion C6 is formed, the stress concentration acting on the second central gear tooth 3242 and/or the second peripheral gear tooth 3252 may be decreased by about 15% compared to when the fifth curved portion C5 and/or the sixth curved portion C6 is not formed.

According to an embodiment, the fifth end area EA5 may be an end area far from the motor 310 in the tooth surface (e.g., the second central gear tooth surface CF2) of the second central gear 324, and the sixth end area EA6 may be an end area close to the motor 310 in the tooth surface (e.g., the second central gear tooth surface CF2) of the second central gear 324. According to an embodiment, the fifth curved portion C5 is formed in the fifth end area EA5, and may be curved so that the tooth thickness TT3 of the second central gear tooth 3242 decreases away from the motor 310. According to an embodiment, the seventh end area EA7 may be an end area far from the motor 310 in the tooth surface (e.g., the second peripheral gear tooth surface PF2) of the second peripheral gear 325, and the eighth end area EA8 may be an end area close to the motor 310 in the tooth surface (e.g., the second peripheral gear tooth surface PF2) of the second peripheral gear 325. According to an embodiment, the sixth curved portion C6 is formed in the eighth end area EA8, and may be curved so that the tooth thickness TT4 of the second peripheral gear tooth 3252 decreases toward the motor 310. For example, the fifth curved portion C5 may be disposed in the end area of the second central gear tooth surface CF2 in the first direction (+X direction), and the sixth curved portion C6 may be disposed in the end area of the second peripheral gear tooth surface PF2 in the second direction (-X direction). The fifth curved portion C5 may be curved so that the tooth thickness TT3 of the second central gear tooth 3242 decreases in the first direction (+X direction). The sixth curved portion C6 may be curved so that the tooth thickness TT4 of the second peripheral gear tooth 3252 decreases in the second direction (-X direction). For example, when the second peripheral gear 325 moves in the second tolerance area TA2 (e.g., the second tolerance area TA2 of FIG. 13), it may be difficult for the second direction (-X direction) end portion of the second central gear tooth 3242 to contact the second peripheral gear tooth surface PF2 due to a limit to the movement range of the second peripheral gear 325 in the second direction (-X direction). Therefore, as illustrated in FIGS. 16 and 17, the fifth curved portion C5 is selectively disposed only in the end area of the second central gear tooth surface CF2 in the first direction (+X direction), and the sixth curved portion C6 is selectively disposed only in the end area of the second peripheral gear tooth surface PF2 in the second direction (-X direction), thereby enhancing the manufacturing efficiency of the gear (e.g., the second central gear 324 and/or the second peripheral gear 325) where the curved portion is formed and reducing the manufacturing costs.

According to an embodiment, the fifth curved portion C5 may be configured to overlap the end portion of the second peripheral gear 325 far from the motor 310, in a radial direction from the rotational axis Ax when the second peripheral gear 325 moves toward the motor 310 as much as possible. For example, the fifth curved portion C5 may be configured to overlap the first direction (+X direction) end portion of the second peripheral gear 325 in a radial direction from the rotational axis Ax when the second peripheral gear 325 moves as much as possible in the second direction (-X direction). For example, referring to FIG. 13, the second peripheral gear 325 may move in the second tolerance area TA2 (e.g., the second tolerance area TA2 of FIG. 13). When the second peripheral gear 325 moves as much as possible in the second direction (-X direction), the end portion of the second peripheral gear 325 in the first direction (+X direction) and the fifth curved portion C5 formed on the second central gear tooth surface CF2 overlap each other in the radial direction (e.g., a direction perpendicular to the first direction (+X direction) and/or the second direction (-X direction)), so that despite the movement of the second peripheral gear 325, the end portion of the second peripheral gear tooth 3252 may contact the fifth curved portion C5, preventing or alleviating stress concentration between the second peripheral gear tooth 3252 and the second central gear tooth 3242.

According to an embodiment, the first central gear tooth surface CF1 and the first peripheral gear tooth surface PF1 may include a first curved portion C1 and a second curved portion C2, respectively, and the second central gear tooth surface CF2 and the second peripheral gear tooth surface PF2 may include a fifth curved portion C5 and a sixth curved portion C6, respectively, but the disclosure is not limited thereto. For example, the first curved portion C1 and the second curved portion C2 may be formed on the first central gear tooth surface CF1 and the first peripheral gear tooth surface PF1, respectively, and the fifth curved portion C5 and/or the sixth curved portion C6 may not be formed. For example, the fifth curved portion C5 and the sixth curved portion C6 may be formed on the second central gear tooth surface CF2 and the second peripheral gear tooth surface PF2, respectively, and the first curved portion C1 and/or the second curved portion C2 may not be formed.

According to an embodiment, a first face width Fw1 of the first central gear 321 and a second face width Fw2 of the second central gear 324 may be different from each other. The first face width Fw1 may refer to a first direction (+X direction) and/or a second direction (-X direction) length of the first central gear 321 (or the first central gear tooth 3212). The first face width Fw1 may be a width of the first central gear 321 along an axis parallel to an axis of rotation of the first central gear 321. The first face width Fw1 may a width of one face of a tooth of the first central gear 321 along an axis parallel to an axis of rotation of the first central gear 321. The second face width Fw2 may refer to a first direction (+X direction) and/or a second direction (-X direction) length of the second central gear 324 (or the second central gear tooth 3242). The second face width Fw2 may be a width of the second central gear 324 along an axis parallel to an axis of rotation of the second central gear 324. The second face width Fw2 may a width of one face of a tooth of the second central gear 324 along an axis parallel to an axis of rotation of the second central gear 324. For example, the first face width Fw1 may be smaller than the second face width Fw2. The first torque T1 (e.g., the first torque T1 applied by the shaft 311) acting on the first central gear 321 may be smaller than the second torque T2 (e.g., the second torque T2 applied by the first carrier 323) acting on the second central gear 324. For example, the stress acting on the first central gear 321 may be smaller than the stress acting on the second central gear 324. According to an embodiment, even when the first face width Fw1 of the first central gear 321 is smaller than the second face width Fw2 of the second central gear 324, the first central gear 321 may withstand the stress acting on the first central gear 321. Through this structure, the size of the speed reduction gear assembly 320 may be optimized, so that the space efficiency of the speed reduction gear assembly 320 and/or the housing (e.g., the housing 201 and 202 of FIGS. 6 and 7) may be enhanced.

According to an embodiment, the second face width Fw2 may be smaller than the product of the first face width Fw1 and the first reduction gear ratio R1. For example, the first face width Fw1 may be larger than a value obtained by dividing the second face width Fw2 by the first reduction gear ratio R1. For example, the safety factor SPC1 (e.g., tooth root bending strength/allowable stress) of the first central gear 321 may be proportional to a value obtained by multiplying the first face width Fw1 by the first reduction gear ratio R1 (e.g., first face width Fw1 * first reduction gear ratio R1) (e.g., safety factor SPC1 of first central gear 321 ∝ (first face width Fw1 * first reduction gear ratio R1)). The safety factor of the second central gear 324 may be proportional to the second face width Fw2 (e.g., safety factor of second central gear 324 ∝ second face width Fw2). The following equation may be established between the safety factor SPC1 of the first central gear 321 and the safety factor SPC2 of the second central gear 324.

[Equation 1]

$$\frac{safety\ factor\ (SFC2)\ of\ second\ central\ gear\ (324)}{safety\ factor\ (SFC1)\ of\ first\ central\ gear\ (321)}$$

$$= \left(\frac{second\ face\ width\ (Fw2)}{first\ face\ width\ (Fw1)}\right) * \left(\frac{1}{R1}\right)$$

Equation 1 is merely an example for helping understanding, and embodiments of the disclosure may not be limited thereto. For example, Equation 1 above may be modified, applied, or extended in various ways.

Since the safety factor SPC1 of the first central gear 321 should be larger than the safety factor SPC2 of the second central gear 324 (e.g., the safety factor SPC1 of the first central gear 321 > the safety factor SPC2 of the second central gear 324), the following equation may be established between the first face width Fw1 and the second face width Fw2.

[Equation 2]

$$first\ face\ width\ (Fw1) \geq \frac{second\ face\ width\ (Fw2)}{first\ reduction\ gear\ ratio\ (R1)}$$

Equation 2 is merely an example for helping understanding, and embodiments of the disclosure may not be limited thereto. For example, Equation 2 above may be modified, applied, or extended in various ways.

For example, when the first face width Fw1 is larger than a value obtained by dividing the second face width Fw2 by the first reduction gear ratio R1, damage to the first central gear 321 may be prevented or alleviated.

According to an embodiment, the third face width Fw3 of the first peripheral gear 322 and the fourth face width Fw4 of the second peripheral gear 325 may be different from each other. The third face width Fw3 may refer to a first direction (+X direction) and/or second direction (-X direction) length of the first peripheral gear 3222 (or the first peripheral gear tooth 3222). The third face width Fw3 may be a width of the first peripheral gear 322 along an axis parallel to an axis of rotation of the first central gear 321. The third face width Fw3 may a width of one face of a tooth of the first peripheral gear 322 along an axis parallel to an axis of rotation of the first central gear 321. The fourth face width Fw4 may refer to a first direction (+X direction) and/or second direction (-X direction) length of the second peripheral gear 325 (or the second peripheral gear tooth 3252). The fourth face width Fw4 may be a width of the second peripheral gear 325 along an axis parallel to an axis of rotation of the second central gear 324. The fourth face width Fw4 may a width of one face of a tooth of the second peripheral gear 325 along an axis parallel to an axis of rotation of the second central gear 324. For example, the third face width Fw3 may be smaller than the fourth face width Fw4. The third torque T3 acting on the first peripheral gear 322 may be smaller than the fourth torque T4 acting on the second peripheral gear 325. For example, the stress acting on the first peripheral gear 322 may be smaller than the stress acting on the second peripheral gear 325. According to an embodiment, even when the third face width Fw3 of the first peripheral gear 322 is smaller than the fourth face width Fw4 of the second peripheral gear 325, the first peripheral gear 322 may withstand the stress acting on the first peripheral gear 322. Through this structure, the size of the speed reduction gear assembly 320 may be optimized, so that the space efficiency of the speed reduction gear assembly 320 and/or the housing (e.g., the housings 201 and 202 of FIGS. 6 and 7) may be enhanced.

According to an embodiment, the fourth face width Fw4 may be smaller than the product of the third face width Fw3 and the first reduction gear ratio R1. For example, the third face width Fw3 may be larger than a value obtained by dividing the first reduction gear ratio R1 from the fourth face width Fw4. For example, the safety factor SFP1 (e.g., tooth root bending strength/allowable stress) of the first peripheral gear 322 may be proportional to a value obtained by multiplying the third face width Fw3 by the first reduction gear ratio R1 (e.g., third face width Fw3 * first reduction gear ratio R1) (e.g., safety factor SFP1 of first peripheral gear 322 ∝ (third face width Fw3 * first reduction gear ratio R1). The safety factor of the second peripheral gear 325 may be proportional to the fourth face width Fw4 (e.g., safety factor of second central gear 325 ∝ fourth face width Fw4). The following equation may be established between the safety factor SFP2 of the second peripheral gear 325 and the safety factor SFP1 of the first peripheral gear 322.

[Equation 3]

$$\frac{safety\ factor\ (SFP2)of\ second\ peripheral\ gear\ (325)}{safety\ factor\ (SFP1)of\ first\ peripheral\ gear\ (322)}$$

$$= \left(\frac{fourth\ face\ width\ (Fw4)}{third\ face\ witdth\ (Fw3)}\right) * \left(\frac{1}{R1}\right)$$

Equation 3 is merely an example for helping understanding, and embodiments of the disclosure may not be limited thereto. For example, Equation 3 above may be modified, applied, or extended in various ways.

Since the safety factor SFP1 of the first peripheral gear 322 should be larger than the safety factor SFP2 of the second peripheral gear 325 (e.g., the safety factor SFP1 of the first peripheral gear 322 > the safety factor SFP2 of the second peripheral gear 325), the following equation may be established between the third face width Fw3 and the fourth face width Fw4.

[Equation 4]

$$third\ face\ width\ (Fw3) \geq \frac{fourth\ face\ width\ (Fw4)}{first\ reduction\ gear\ ratio\ (R1)}$$

Equation 4 is merely an example for helping understanding, and embodiments of the disclosure may not be limited thereto. For example, Equation 4 above may be modified, applied, or extended in various ways.

For example, when the third face width Fw3 is larger than a value obtained by dividing the fourth face width Fw4 by the first reduction gear ratio R1, damage to the first peripheral gear 322 may be prevented or alleviated.

According to an embodiment, the ratio of the first face width Fw1 to the second face width Fw2 may be substantially the same as the ratio of the third face width Fw3 to the fourth face width Fw4. For example, a ratio of the first face width Fw1 to the second face width Fw2 and a ratio of the third face width Fw3 to the fourth face width Fw4 both may be the first reduction gear ratio R1.

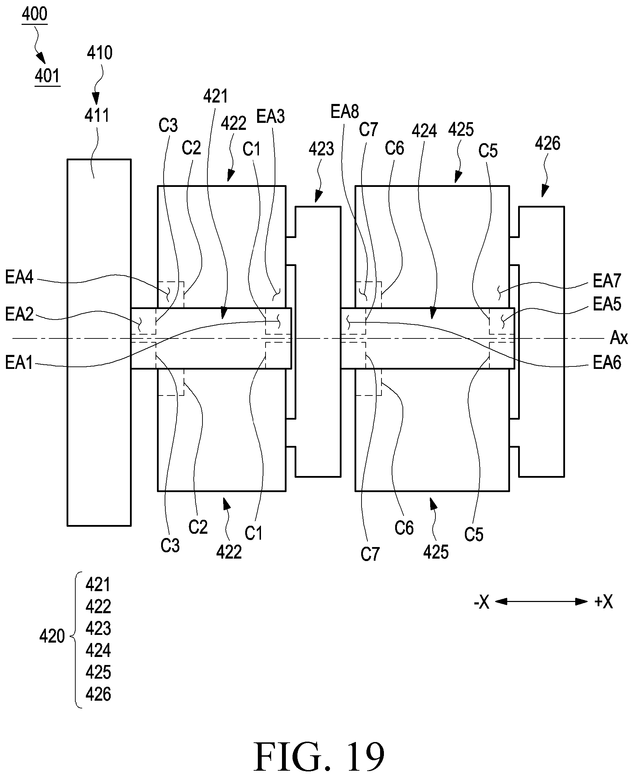

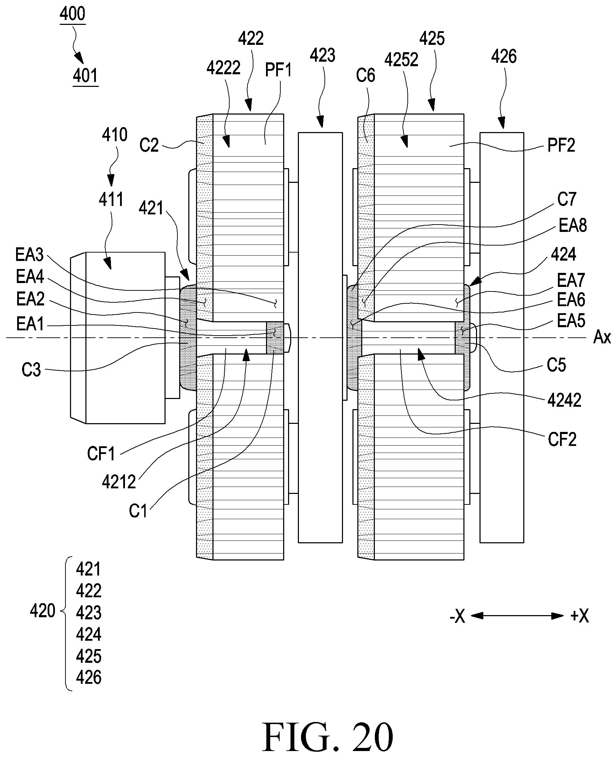

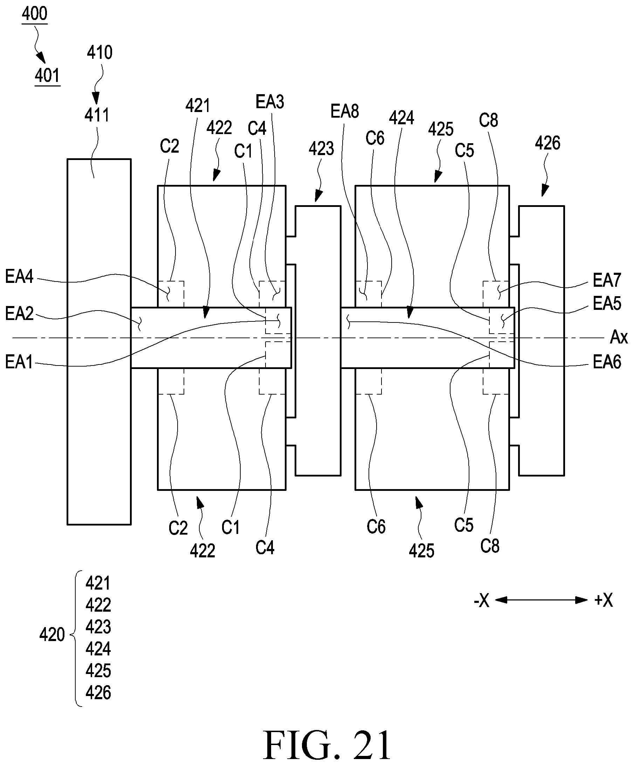

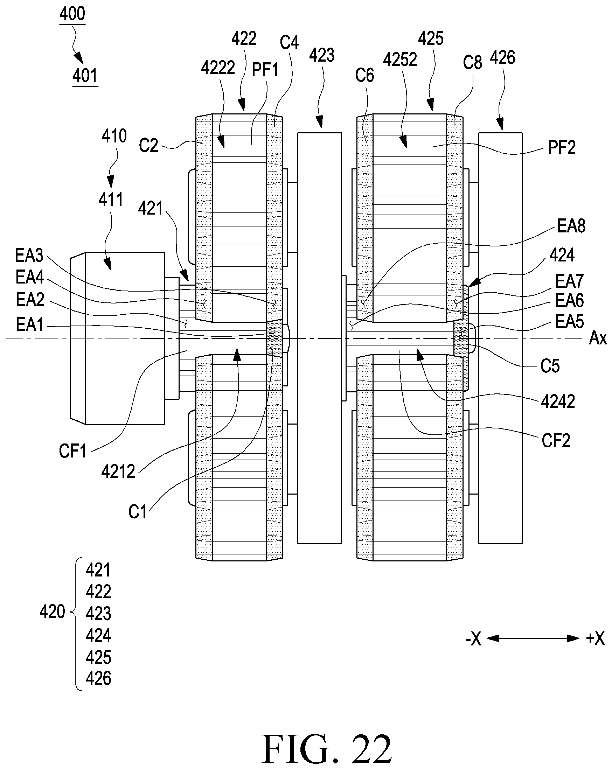

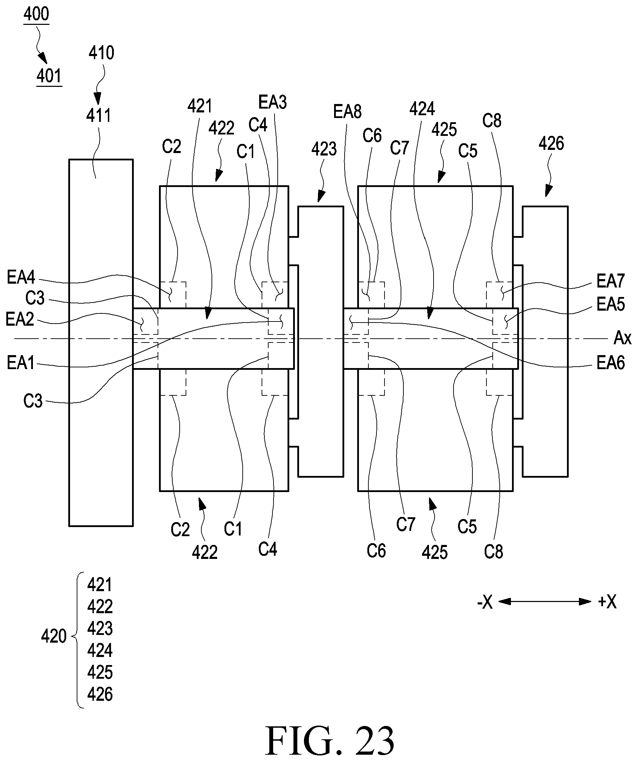

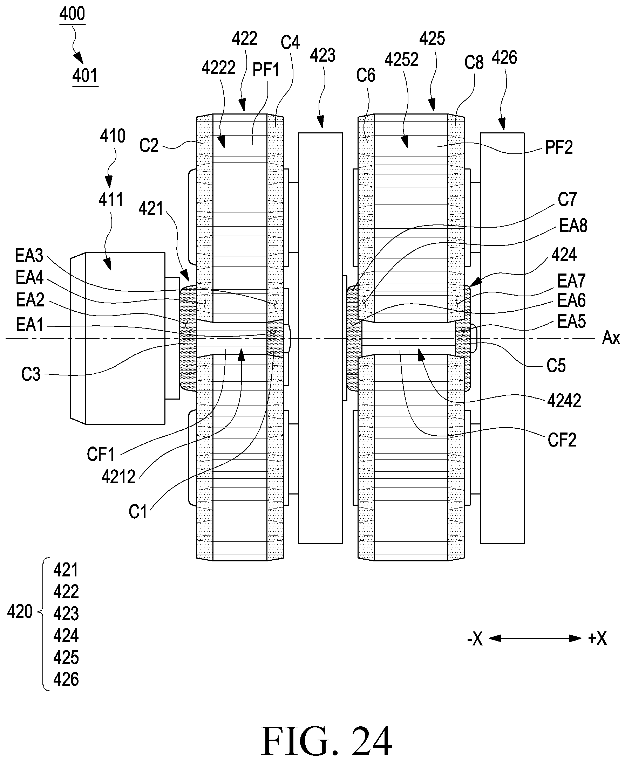

FIG. 19 is a view briefly illustrating a cross section of a partial configuration of an electronic device according to an embodiment of the disclosure. FIG. 20 is a side view illustrating a partial configuration of an electronic device according to an embodiment of the disclosure. FIG. 21 is a view briefly illustrating a cross section of a partial configuration of an electronic device according to an embodiment of the disclosure. FIG. 22 is a side view illustrating a partial configuration of an electronic device according to an embodiment of the disclosure. FIG. 23 is a view briefly illustrating a cross section of a partial configuration of an electronic device according to an embodiment of the disclosure. FIG. 24 is a side view illustrating a partial configuration of an electronic device according to an embodiment of the disclosure.

Specifically, FIGS. 19, 21 and 23 are side views illustrating the motor 410, the first central gear 421, the first peripheral gear 422, the first carrier 423, the second central gear 424, and the second peripheral gear 425. FIGS. 20, 22, and 24 are diagrams schematically illustrating the motor 410, the first central gear 421, the first peripheral gear 422, the first carrier 423, the second central gear 424, the second peripheral gear 425, and the second carrier 426.

The detailed configuration of the electronic device 400 not described below may be identical or similar to the detailed configuration of the electronic device 101 described with reference to FIGS. 1 to 7 and/or the detailed configuration of the electronic device 300 described with reference to FIGS. 8 to 18.

The detailed configuration of the driving assembly 401 not described below may be identical or similar to the detailed configuration of the driving assembly 240 described with reference to FIGS. 4 to 7 and/or the detailed configuration of the driving assembly 301 described with reference to FIGS. 8 to 18.

According to an embodiment, the first central gear tooth surface CF1 may include a third curved portion C3. The third curved portion C3 may be formed in an end area opposite to the end area where the first curved portion C1 is formed. For example, the third curved portion C3 may be formed in the second end area EA2, and be curved so that the tooth thickness of the first central gear tooth 4212 decreases toward the motor 410. For example, the third curved portion C3 may be disposed in an end area of the first central gear tooth surface CF1, in the second direction (-X direction). The third curved portion C3 may be curved so that the tooth thickness of the first central gear tooth 4212 decreases in the second direction (-X direction). The first curved portion C1 and the third curved portion C3 may be understood as portions formed to be rounded in two opposite end areas of the first central gear tooth surface CF1. As such, by disposing the curved portions (e.g., the first curved portion C1 and the third curved portion C3) in two opposite end areas of the first central gear tooth surface CF1, it is possible to effectively prevent or alleviate stress concentration on the first peripheral gear tooth surface PF1. The third curved portion C3 may be disposed on each of the first central gear tooth surfaces CF1 constituting two opposite side surfaces of the first central gear tooth 4212. The third curved portion C3 may be referred to as a curved portion, a curve surface, and/or a curved surface.

According to an embodiment, the first peripheral gear tooth surface PF1 may include a fourth curved portion C4. The fourth curved portion C4 may be formed in an end area opposite to the end area where the second curved portion C2 is formed. For example, the fourth curved portion C4 is formed in the third end area EA3, and may be curved so that the tooth thickness of the first peripheral gear tooth 4222 decreases away from the motor 410. For example, the fourth curved portion C4 may be disposed in an end area of the first peripheral gear tooth surface PF1 in the first direction (+X direction). The fourth curved portion C4 may be curved so that the tooth thickness of the first peripheral gear tooth 4222 decreases in the first direction (+X direction). The second curved portion C2 and the fourth curved portion C4 may be understood as portions formed to be rounded in two opposite end areas of the first peripheral gear tooth surface PF1. As such, by disposing the curved portions (e.g., the second curved portion C2 and the fourth curved portion C4) in two opposite end areas of the first peripheral gear tooth surface PF1, it is possible to effectively prevent or alleviate stress concentration on the first central gear tooth surface CF1. The fourth curved portion C4 may be disposed on each of the first peripheral gear tooth surfaces PF1 constituting two opposite side surfaces of the first peripheral gear tooth 4222. The fourth curved portion C4 may be referred to as a curved portion, a curve surface, and/or a curved surface.

According to an embodiment, the second central gear tooth surface CF2 may include a seventh curved portion C7. The seventh curved portion C7 may be formed in an end area opposite to the end area where the fifth curved portion C5 is formed. For example, the seventh curved portion C7 may be formed in the sixth end area EA6, and may be curved so that the tooth thickness of the second central gear tooth 4242 decreases toward the motor 410. For example, the seventh curved portion C7 may be disposed in an end area of the second central gear tooth surface CF2, in the second direction (-X direction). The seventh curved portion C7 may be curved so that the tooth thickness of the second central gear tooth 4242 decreases in the second direction (-X direction). The fifth curved portion C5 and the seventh curved portion C7 may be understood as portions formed to be rounded in two opposite end areas of the second central gear tooth surface CF2. As such, by disposing the curved portions (e.g., the fifth curved portion C5 and the seventh curved portion C7) in two opposite end areas of the second central gear tooth surface CF2, it is possible to effectively prevent or alleviate stress concentration on the second peripheral gear tooth surface PF2. The seventh curved portion C7 may be disposed on each of the second central gear teeth surface CF1 constituting two opposite side surfaces of the second central gear tooth 4242. The seventh curved portion C7 may be referred to as a curved portion, a curve surface, and/or a curved surface.

According to an embodiment, the second peripheral gear tooth surface PF2 may include an eighth curved portion C8. The eighth curved portion C8 may be formed in an end area opposite to the end area where the sixth curved portion C6 is formed. For example, the eighth curved portion C8 is formed in the seventh end area EA7, and may be curved so that the tooth thickness of the second peripheral gear tooth 4252 decreases away from the motor 410. For example, the eighth curved portion C8 may be disposed in an end area of the second peripheral gear tooth surface PF2 in the first direction (+X direction). The eighth curved portion C8 may be curved so that the tooth thickness of the second peripheral gear tooth 4252 decreases in the first direction (+X direction). The sixth curved portion C6 and the eighth curved portion C8 may be understood as portions formed to be rounded in two opposite end areas of the second peripheral gear tooth surface PF2. As such, by disposing the curved portions (e.g., the sixth curved portion C6 and the eighth curved portion C8) in two opposite end areas of the second peripheral gear tooth surface PF2, it is possible to effectively prevent or alleviate stress concentration on the second central gear tooth surface CF2. The eighth curved portion C8 may be disposed on each of the second peripheral gear tooth surfaces PF2 constituting two opposite side surfaces of the second peripheral gear tooth 4252. The eighth curved portion C8 may be referred to as a curved portion, a curve surface, and/or a curved surface.

According to an embodiment, the third curved portion C3, the fourth curved portion C4, the seventh curved portion C7, and/or the eighth curved portion C8 may be essentially or optionally formed. For example, as illustrated in FIGS. 19 and 20, the third curved portion C3 may be formed in the first central gear 421, the seventh curved portion C7 may be formed in the second central gear 424, the fourth curved portion C4 may not be formed in the first peripheral gear 422, and the eighth curved portion C8 may not be formed in the second peripheral gear 425. For example, as illustrated in FIGS. 21 and 22, the fourth curved portion C4 may be formed in the first peripheral gear 422, the eighth curved portion C8 may be formed in the second peripheral gear 425, the third curved portion C3 may not be formed in the first central gear 421, and the seventh curved portion C7 may not be formed in the second central gear 424. For example, as illustrated in FIGS. 23 and 24, the third curved portion C3 may be formed in the first central gear 421, the fourth curved portion C4 may be formed in the first peripheral gear 422, the seventh curved portion C7 may be formed in the second central gear 424, and the eighth curved portion C8 may be formed in the second peripheral gear 425.

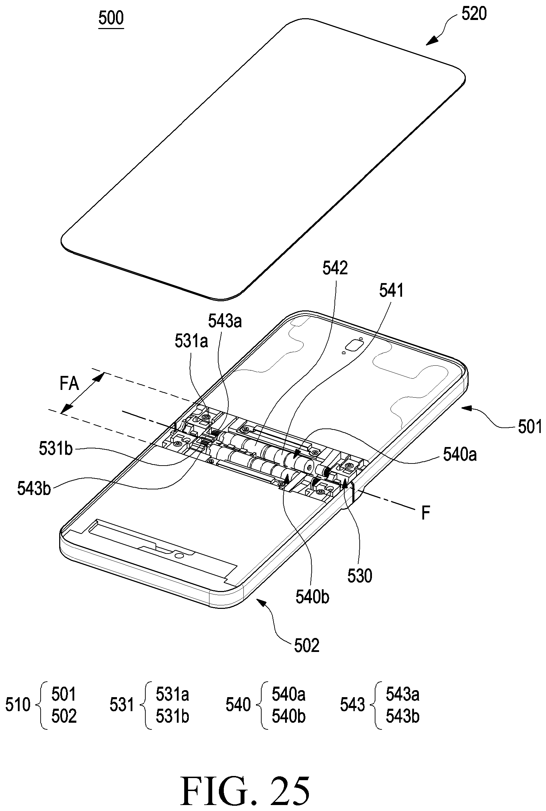

FIG. 25 is an exploded perspective view illustrating an electronic device according to an embodiment of the disclosure.

Specifically, FIG. 25 illustrates a foldable electronic device, illustrating a state where the flexible display 520 is separated from the housing 510.

According to an embodiment, the electronic device 500 may be a foldable electronic device configured so that the first housing portion 501 and the second housing portion 502 rotate around the folding axis F.

According to an embodiment, the electronic device 500 may include a first housing portion 501 and a second housing portion 502. The first housing portion 501 and the second housing portion 502 may be a component of the "housing 510" and/or the "foldable housing 510". For example, the housing 510 may include a first housing portion 501 and a second housing portion 502.

According to an embodiment, the second housing portion 502 may be movably connected to the first housing portion 501. For example, the second housing portion 502 may be rotatably connected to the first housing portion 501. The second housing portion 502 may be rotatably configured on the first housing portion 501 with respect to the folding axis F.

According to an embodiment, the electronic device 500 may include a flexible display 520. The flexible display 520 may be disposed in the first housing portion 501 and the second housing portion 502. For example, the flexible display 520 may be disposed on the first housing portion 501 and the second housing portion 502.

According to an embodiment, the flexible display 520 may be configured to change in shape or size as the second housing portion 502 moves with respect to the first housing portion 501. For example, when the electronic device 500 is in an unfolded state (e.g., the state of FIG. 25), the flexible display 520 may be in an unfolded state. For example, when the electronic device 500 is in a folded state (not illustrated) (e.g., a state in which the second housing portion 502 is rotated about the folding axis F with respect to the first housing portion 501 from the state of FIG. 25 so that the first housing portion 501 and the second housing portion 502 are stacked), the flexible display 520 may be curved and folded together with the first housing portion 501 and/or the second housing portion 502.

According to an embodiment, the electronic device 500 may include a hinge assembly 530. The hinge assembly 530 may be disposed between the first housing portion 501 and the second housing portion 502. For example, the hinge assembly 530 may be disposed in the folding area FA. The hinge assembly 530 may rotatably connect the first housing portion 501 and the second housing portion 502 with respect to the folding axis F. The hinge assembly 530 may provide a space where the driving assembly 540 may be received.

According to an embodiment, the electronic device 500 may include a driving assembly 540. The driving assembly 540 may be disposed in the folding area FA where the hinge assembly 530 is disposed. The driving assembly 540 may be disposed in a space provided in the hinge assembly 530. The driving assembly 540 may be configured to provide power so that the second housing portion 502 moves with respect to the first housing portion 501.

According to an embodiment, the driving assembly 540 may be disposed on at least one of the first housing portion 501 or the second housing portion 502. For example, the driving assembly 540 may be disposed on each of the first housing portion 501 and the second housing portion 502.

According to an embodiment, the driving assembly 540 may include a first driving assembly 540a. The first driving assembly 540a may be disposed on the first housing portion 501. According to an embodiment, the driving assembly 540 may include a second driving assembly 540b. The second driving assembly 540b may be disposed on the second housing portion 502. The first driving assembly 540a and the second driving assembly 540b may be disposed on one side and the other side, respectively, of the folding axis F. Each of the first driving assembly 540a and the second driving assembly 540b may be referred to as a "driving assembly". The first driving assembly 540a and the second driving assembly 540b may have structures symmetrical to each other with respect to the folding axis F.

According to an embodiment, the driving assembly 540 may include a motor 541, a speed reduction gear assembly 542, and a driving gear 543. The detailed configuration of the motor 541 may be identical or similar to the detailed configuration of the actuator 240a described with reference to FIGS. 4 to 7 and/or the detailed configuration of the motor 310 described with reference to FIG. 8. The detailed configuration of the speed reduction gear assembly 542 may be identical or similar to the detailed configuration of the speed reduction gear assembly 240b described with reference to FIGS. 4 to 7, the speed reduction gear assembly 320 described with reference to FIGS. 8 to 18, and the speed reduction gear assembly 420 described with reference to FIGS. 19 to 24. The detailed configuration of the driving gear 543 may be identical or similar to the detailed configuration of the driving gear 240c described with reference to FIGS. 4 to 7 and/or the driving gear 330 described with reference to FIG. 8.

According to an embodiment, the hinge assembly 530 may include a rack gear 531. The rack gear 531 may include a first rack gear 531a and a second rack gear 531b. The first rack gear 531a may be engaged with the first driving gear 543a of the first driving assembly 540a. The second rack gear 531b may be engaged with the second driving gear 543b of the second driving assembly 540b. The rack gear 531 may transfer the power formed by the driving assembly 540 to the first housing portion 501 and/or the second housing portion 502. For example, when the driving assembly 540 operates, the rotational force of the driving assembly 540 may be transferred to the rack gear 531, and the force transferred to the rack gear 531 may cause rotation about the folding axis F of the first housing portion 501 and/or the second housing portion 502. For example, the rack gear 531 may be a portion of the housing 510. For example, the first rack gear 531a may be a portion of the first housing portion 501, and the second rack gear 531b may be a portion of the second housing portion 502. For example, the rack gear 531 may be a component of the driving assembly 540. For example, the driving assembly 540 may include a rack gear 531.

In an embodiment (not illustrated), only one driving assembly 540 may be provided. For example, the driving assembly 540 may be disposed in the first housing portion 501 or the second housing portion 502. For example, the driving assembly 540 may be disposed between the first housing portion 501 and the second housing portion 502. The driving assembly 540 may provide a driving force by which any one of the first housing portion 501 and the second housing portion 502 may move with respect to the other.

The electronic device includes a housing configured to be movable and a driving assembly for moving the housing. The driving assembly includes a motor and a speed reduction gear assembly that transfers power generated by the motor. The speed reduction gear assembly is composed of a planet gear that may reduce the number of rotations generated by the motor and enhance the torque generated by the motor and deliver it to the pinion gear. Conventionally, two-stage speed reduction gear assemblies have been known to effectively reduce rotational speed and enhance torque effectively.

However, in the conventional speed reduction gear assembly, an eccentricity occurs between the central gear and the peripheral gear due to the tolerance between the central gear (e.g., sun gear) and the peripheral gear (e.g., planet gear) constituting the speed reduction gear assembly, which causes stress concentration on the teeth of the central gear and the teeth of the peripheral gear.

Further, the conventional speed reduction gear assembly suffers from noise and deterioration of the operation stability and efficiency of the speed reduction gear assembly due to the deformation, damage, and/or wear of the teeth caused by stress concentration between the central gear and the peripheral gear.

Further, in the conventional speed reduction gear assembly, the first-stage planet gear and the second-stage planet gear have face widths corresponding to each other, so that the speed reduction gear assembly occupies a large space in the housing, which decreased the spatial efficiency of the housing.

An object of the disclosure is to prevent or alleviate stress concentration due to tolerances of gears constituting the speed reduction gear assembly.

An object of the disclosure is to prevent or alleviate noise and enhance the operational stability and/or efficiency of the speed reduction gear assembly by suppressing deformation and/or abrasion of the teeth constituting the speed reduction gear assembly.

An object the disclosure is to enhance the spatial efficiency of the housing by optimizing the size of the speed reduction gear assembly.

Objects of the disclosure are not limited to those mentioned, but may rather be diverse without departing from the spirit and scope of the disclosure.

The electronic device according to various embodiments of the disclosure may prevent or alleviate stress concentration acting between the gears constituting the speed reduction gear assembly.

The electronic device according to various embodiments of the disclosure may prevent or alleviate noise and enhance the operational stability and/or efficiency of the speed reduction gear assembly by suppressing deformation and/or abrasion of the teeth constituting the speed reduction gear assembly.

The electronic device according to various embodiments of the disclosure may enhance the spatial efficiency of the housing by optimizing the size of the speed reduction gear assembly.

Effects obtainable from the disclosure are not limited to the above-mentioned effects, and other effects not mentioned may be apparent to one of ordinary skill in the art from the following description.

A driving assembly according to an embodiment of the disclosure may be a driving assembly accommodated in an electronic device. The driving assembly may comprise: a motor configured to generate a rotational force, and comprising a shaft configured to rotate along a rotational axis; and a speed reduction gear assembly connected to the motor. The speed reduction gear assembly may comprise: a first central gear connected to the shaft and comprising a first central gear tooth; a first peripheral gear comprising a first peripheral gear tooth engaged with the first central gear tooth; and a ring gear formed in a ring shape centered around the rotational axis to surround the first peripheral gear and engaged with the first peripheral gear. A tooth surface of the first central gear may comprise a first end area, which is an end area of the tooth surface of the first central gear in a direction of the rotational axis, wherein a curve is formed in the first end area in a direction in which a tooth thickness of the first central gear tooth decreases.

The tooth thickness of the first central gear may decrease along an axis through the center of the first central gear. The first central gear tooth may comprise a first central gear tooth end which is distal to the center of the first central gear, and the thickness of the first central gear tooth may decrease towards the first central gear tooth end. A rate of change of the thickness of the first central gear tooth with respect to a direction of rotation of the first central gear may increase towards the first central gear tooth end.

A driving assembly according to an embodiment of the disclosure may be a driving assembly accommodated in an electronic device. The driving assembly may comprise: a motor configured to generate a rotational force, and comprising a shaft configured to rotate along a rotational axis; and a speed reduction gear assembly connected to the motor. The speed reduction gear assembly may comprise: a first central gear connected to the shaft and comprising a first central gear tooth; a first peripheral gear comprising a first peripheral gear tooth engaged with the first central gear tooth;

and a ring gear formed in a ring shape centered around the rotational axis to surround the first peripheral gear and engaged with the first peripheral gear. A tooth surface of the first peripheral gear may comprise a fourth end area corresponding to the second end area, which is an end area of the tooth surface of the first peripheral gear, wherein a curve is formed in the fourth end area in a direction in which a tooth thickness of the first peripheral gear tooth decreases.

The tooth thickness of the first peripheral gear may decrease along an axis through the center of the first peripheral gear. The first peripheral gear tooth may comprise a first peripheral gear tooth end which is distal to a center of the first peripheral gear, and the thickness of the first peripheral gear tooth may decrease towards the first peripheral gear tooth end. A rate of change of the thickness of the first peripheral gear tooth with respect to a direction of rotation of the first peripheral gear may increase towards the first peripheral gear tooth end.

A driving assembly according to an embodiment of the disclosure may be a driving assembly accommodated in an electronic device. The driving assembly may comprise: a motor configured to generate a rotational force, and comprising a shaft configured to rotate along a rotational axis; and a speed reduction gear assembly connected to the motor. The speed reduction gear assembly may comprise: a first central gear connected to the shaft and comprising a first central gear tooth; a first peripheral gear comprising a first peripheral gear tooth engaged with the first central gear tooth; and a ring gear formed in a ring shape centered around the rotational axis to surround the first peripheral gear and engaged with the first peripheral gear. The first central gear tooth comprises a first central gear tooth end which is arranged distally to the center of the first central gear, and a thickness of the first central gear tooth with respect to a direction of rotation of the first central gear may decrease towards the first central gear tooth end. The first central gear tooth may comprise at least one curved surface such that a rate of change of the thickness of the first central gear tooth with respect to a direction of rotation of the first central gear increases towards the first central gear tooth end.

The first central gear tooth comprises a first central gear tooth end which is arranged distally to the center of the first central gear, and a thickness of the first central gear tooth with respect to a direction of rotation of the first central gear may decrease towards the first central gear tooth end. The first central gear tooth may comprise at least one curved surface such that a rate of change of the thickness of the first central gear tooth with respect to a direction of rotation of the first central gear increases towards the first central gear tooth end. The first peripheral gear tooth comprises a first peripheral gear tooth end which is arranged distally to the center of the first peripheral gear, and a thickness of the first peripheral gear tooth with respect to a direction of rotation of the first peripheral gear may decrease towards the first peripheral gear tooth end. The first peripheral gear tooth may comprise at least one curved surface such that a rate of change of the thickness of the first peripheral gear tooth with respect to a direction of rotation of the first peripheral gear increases towards the first peripheral gear tooth end.

A driving assembly according to an embodiment of the disclosure may be a driving assembly accommodated in an electronic device. The driving assembly may comprise: a motor configured to generate a rotational force, and comprising a shaft configured to rotate along a rotational axis; and a speed reduction gear assembly connected to the motor. The speed reduction gear assembly may comprise: a first central gear connected to the shaft and comprising a first central gear tooth; a first peripheral gear comprising a first peripheral gear tooth engaged with the first central gear tooth; and a ring gear formed in a ring shape centered around the rotational axis to surround the first peripheral gear and engaged with the first peripheral gear. The first central gear tooth comprises a first central gear tooth end which is arranged distally to the center of the first central gear, and a thickness of the first central gear tooth with respect to a direction of rotation of the first central gear may decrease towards the first central gear tooth end, and the first peripheral gear tooth comprises a first peripheral gear tooth end which is arranged distally to the center of the first peripheral gear, and a thickness of the first peripheral gear tooth with respect to a direction of rotation of the first peripheral gear may decrease towards the first peripheral gear tooth end. The first central gear tooth may comprise at least one curved surface such that a rate of change of the thickness of the first central gear tooth with respect to a direction of rotation of the first central gear increases towards the first central gear tooth end. Additionally or alternatively, the first peripheral gear tooth may comprise at least one curved surface such that a rate of change of the thickness of the first peripheral gear tooth with respect to a direction of rotation of the first peripheral gear increases towards the first peripheral gear tooth end.

A driving assembly 240; 301; 401; 540 according to an embodiment of the disclosure may be a driving assembly 240; 301; 401; 540 accommodated in an electronic device 300; 400; 500.

The driving assembly 240; 301; 401; 540 according to an embodiment of the disclosure may comprise a motor 310; 410; 541 configured to generate a rotational force, and comprising a shaft 311; 411 configured to rotate along a rotational axis Ax.

The driving assembly 240; 301; 401; 540 according to an embodiment of the disclosure may comprise a speed reduction gear assembly 320; 420; 542 connected to the motor.

The driving assembly 240; 301; 401; 540 according to an embodiment of the disclosure may comprise a driving gear 330; 543 connected to the speed reduction gear assembly.

The speed reduction gear assembly of the driving assembly 240; 301; 401; 540 according to an embodiment of the disclosure may comprise a first central gear 321; 421 connected to the shaft and comprising a first central gear tooth 3212; 4212.

The speed reduction gear assembly of the driving assembly 240; 301; 401; 540 according to an embodiment of the disclosure may comprise a first peripheral gear 322; 422 comprising a first peripheral gear tooth 3222; 4222 engaged with the first central gear tooth.

The speed reduction gear assembly of the driving assembly 240; 301; 401; 540 according to an embodiment of the disclosure may comprise a ring gear 327 formed in a ring shape centered around the rotational axis to surround the first peripheral gear and engaged with the first peripheral gear.

In the driving assembly 240; 301; 401; 540 according to an embodiment of the disclosure, a tooth surface CF1 of the first central gear may comprise a first end area EA1 and a second end area EA2, which are end areas of the tooth surface of the first central gear in a direction of the rotational axis. A curve may be formed in the first end area in a direction in which a tooth thickness TT1 of the first central gear tooth decreases.

In the driving assembly 240; 301; 401; 540 according to an embodiment of the disclosure, a tooth surface PF1 of the first peripheral gear may comprise a third end area EA3 corresponding to the first end area and a fourth end area EA4 corresponding to the second end area. A curve may be formed in the fourth end area in a direction in which a tooth thickness TT2 of the first peripheral gear tooth decreases.

In the driving assembly 240; 301; 401; 540 according to an embodiment of the disclosure, the first end area EA1 may be an end area, located far from the motor, of the tooth surface of the first central gear.

In the driving assembly 240; 301; 401; 540 according to an embodiment of the disclosure, the tooth surface of the first central gear may comprise a first curved portion C1 formed at the first end area and curved so that the tooth thickness of the first central gear tooth decreases away from the motor.

In the driving assembly 240; 301; 401; 540 according to an embodiment of the disclosure, the tooth surface of the first peripheral gear may comprise a second curved portion C2 formed at the fourth end area and curved so that the tooth thickness of the first peripheral gear tooth decreases toward the motor.

In the driving assembly 240; 301; 401; 540 according to an embodiment of the disclosure, the tooth surface of the first central gear 421 may further comprise a third curved portion C3 disposed at the second end area, and curved so that the tooth thickness of the first central gear tooth decreases toward the motor 410.

In the driving assembly 240; 301; 401; 540 according to an embodiment of the disclosure, the tooth surface of the first peripheral gear 422 may further comprise a fourth curved portion C4 disposed at the third end area, and curved so that the tooth thickness of the first peripheral gear tooth decreases away from the motor 410.

In the driving assembly 240; 301; 401; 540 according to an embodiment of the disclosure, the first curved portion may be configured to overlap an end of the first peripheral gear far from the motor in a radial direction centered on the rotation axis when the first peripheral gear moves to the maximum toward the motor.

The speed reduction gear assembly of the driving assembly 240; 301; 401; 540 according to an embodiment of the disclosure may further comprise a first carrier 323; 423 connected to a center of the first peripheral gear, and configured to rotate around the rotation axis.

The speed reduction gear assembly of the driving assembly 240; 301; 401; 540 according to an embodiment of the disclosure may comprise a second central gear 324; 424 configured to rotate around the rotation axis with the first carrier, and may comprise a second central gear tooth 3242; 4242.

The speed reduction gear assembly of the driving assembly 240; 301; 401; 540 according to an embodiment of the disclosure may comprise a second peripheral gear 325; 425 may comprise a second peripheral gear tooth 3252; 4252 engaged with the second central gear tooth.

In the driving assembly 240; 301; 401; 540 according to an embodiment of the disclosure, a first face width Fw1 of the first central gear and a second face width Fw2 of the second central gear may be different from each other.

In the driving assembly 240; 301; 401; 540 according to an embodiment of the disclosure, a third face width Fw3 of the first peripheral gear and a fourth face width Fw4 of the second peripheral gear may be different from each other.

In the driving assembly 240; 301; 401; 540 according to an embodiment of the disclosure, the first face width may be smaller than the second face width.

In the driving assembly 240; 301; 401; 540 according to an embodiment of the disclosure, the third face width may be smaller than the fourth face width.

In the driving assembly 240; 301; 401; 540 according to an embodiment of the disclosure, the first central gear and the first peripheral gear may have a first reduction gear ratio R1.

In the driving assembly 240; 301; 401; 540 according to an embodiment of the disclosure, the second face width may be smaller than a product of the first face width and the first reduction gear ratio.

In the driving assembly 240; 301; 401; 540 according to an embodiment of the disclosure, the fourth face width may be smaller than a product of the third face width and the first reduction gear ratio.

In the driving assembly 240; 301; 401; 540 according to an embodiment of the disclosure, a ratio of the first face width to the second face width may be substantially the same as a ratio of the third face width to the fourth face width.

In the driving assembly 240; 301; 401; 540 according to an embodiment of the disclosure, a tooth surface CF2 of the second central gear may comprise a fifth end area EA5 which is an end area far from the motor in the direction of the rotational axis and a sixth end area EA6 which is an end area closer to the motor in the direction of the rotational axis, and may comprise a fifth curved portion C5 formed at the fifth end area and curved so that a tooth thickness of the second central gear tooth decreases away from the motor.

In the driving assembly 240; 301; 401; 540 according to an embodiment of the disclosure, a tooth surface PF2 of the second peripheral gear may comprise a seventh end area EA7 corresponding to the fifth end area and an eighth end area EA8 corresponding to the sixth end area, and may comprise a sixth curved portion C6 formed at the eighth end area and curved so that a tooth thickness of the second peripheral gear tooth decreases toward the motor.

The speed reduction gear assembly of the driving assembly 240; 301; 401; 540 according to an embodiment of the disclosure may further comprise a second carrier 326 connected to a center of the second peripheral gear, and configured to rotate around the rotation axis.

The speed reduction gear assembly of the driving assembly 240; 301; 401; 540 according to an embodiment of the disclosure may further comprise a center shaft 328 extending along the rotation axis, configured to penetrate the shaft, the first central gear, the first carrier and the second central gear, and fixed to the second carrier.

In the driving assembly 240; 301; 401; 540 according to an embodiment of the disclosure, the center shaft may be configured to rotate at the same angular velocity as the second carrier and at a different angular velocity from the shaft, the first central gear, the first carrier, and the second center gear.

In the driving assembly 240; 301; 401; 540 according to an embodiment of the disclosure, the driving gear may be a pinion gear capable of engaging and operating with a rack gear 240d.

An electronic device according to an embodiment of the disclosure may comprise one or more of the driving assemblies as described above.

An electronic device 300; 400; 500 according to an embodiment of the disclosure may comprise a housing 210; 510 including a first housing portion 201; 501 and a second housing portion 202; 502 movably connected to the first housing portion.

The electronic device 300; 400; 500 according to an embodiment of the disclosure may comprise a flexible display 203; 520 disposed on the first housing portion and the second housing portion and configured to change in at least one of shape or size as the second housing portion moves with respect to the first housing portion.

The electronic device 300; 400; 500 according to an embodiment of the disclosure may comprise a driving assembly 240; 301; 401; 540 disposed on at least one of the first housing portion or the second housing portion and configured to provide power to allow the second housing portion to move with respect to the first housing portion.

The driving assembly 240; 301; 401; 540 of the electronic device 300; 400; 500 according to an embodiment of the disclosure may comprise a motor 310; 410; 541 configured to generate a rotational force, and comprising a shaft 311; 411 configured to rotate along a rotational axis Ax.

The driving assembly 240; 301; 401; 540 of the electronic device 300; 400; 500 according to an embodiment of the disclosure may comprise a speed reduction gear assembly 320; 420; 542 connected to the motor.

The driving assembly 240; 301; 401; 540 of the electronic device 300; 400; 500 according to an embodiment of the disclosure may comprise a driving gear 330; 543 connected to the speed reduction gear assembly.

The speed reduction gear assembly of the electronic device 300; 400; 500 according to an embodiment of the disclosure may comprise a first central gear 321; 421 connected to the shaft and comprising a first central gear tooth 3212; 4212.

The speed reduction gear assembly of the electronic device 300; 400; 500 according to an embodiment of the disclosure may comprise a first peripheral gear 322; 422 comprising a first peripheral gear tooth 3222; 4222 engaged with the first central gear tooth.

The speed reduction gear assembly of the electronic device 300; 400; 500 according to an embodiment of the disclosure may comprise a ring gear 327 engaged with the first peripheral gear.

In the electronic device 300; 400; 500 according to an embodiment of the disclosure, a tooth surface CF1 of the first central gear may comprise a first end area EA1 and a second end area EA2, which may be end areas of the tooth surface of the first central gear in a direction of the rotational axis. A curve may be formed in the first end area in a direction in which a tooth thickness TT1 of the first central gear tooth decreases.

In the electronic device 300; 400; 500 according to an embodiment of the disclosure, a tooth surface PF1 of the first peripheral gear may comprise a third end area EA3 corresponding to the first end area and a fourth end area EA4 corresponding to the second end area. A curve may be formed in the fourth end area in a direction in which a tooth thickness TT2 of the first peripheral gear tooth decreases.

An electronic device 300; 400; 500 according to an embodiment of the disclosure may comprise a housing 210; 510 including a first housing portion 201; 501 and a second housing portion 202; 502 movably connected to the first housing portion.

The electronic device 300; 400; 500 according to an embodiment of the disclosure may comprise a flexible display 203; 520 disposed on the first housing portion and the second housing portion and configured to change in at least one of shape or size as the second housing portion moves with respect to the first housing portion.

The electronic device 300; 400; 500 according to an embodiment of the disclosure may comprise a driving assembly 240; 301; 401; 540 disposed on at least one of the first housing portion or the second housing portion and configured to provide power to allow the second housing portion to move with respect to the first housing portion.

The driving assembly 240; 301; 401; 540 of the electronic device 300; 400; 500 according to an embodiment of the disclosure may comprise a motor 310; 410; 541 configured to generate a rotational force, and comprising a shaft 311; 411 configured to rotate along a rotational axis Ax.

The driving assembly 240; 301; 401; 540 of the electronic device 300; 400; 500 according to an embodiment of the disclosure may comprise a speed reduction gear assembly 320; 420; 542 connected to the motor.

The driving assembly 240; 301; 401; 540 of the electronic device 300; 400; 500 according to an embodiment of the disclosure may comprise a driving gear 330; 543 connected to the speed reduction gear assembly.

The speed reduction gear assembly of the electronic device 300; 400; 500 according to an embodiment of the disclosure may comprise a first central gear 321; 421 connected to the shaft.

The speed reduction gear assembly of the electronic device 300; 400; 500 according to an embodiment of the disclosure may comprise a first peripheral gear 322; 422 engaged with the first central gear.

The speed reduction gear assembly of the electronic device 300; 400; 500 according to an embodiment of the disclosure may comprise a first carrier 323; 423 connected to a center of the first peripheral gear, and configured to rotate around the rotation axis.

The speed reduction gear assembly of the electronic device 300; 400; 500 according to an embodiment of the disclosure may comprise a second central gear 324; 424 configured to, together with the first carrier, rotate around the rotation axis.

The speed reduction gear assembly of the electronic device 300; 400; 500 according to an embodiment of the disclosure may comprise a second peripheral gear 325; 425 engaged with the second central gear.

The speed reduction gear assembly of the electronic device 300; 400; 500 according to an embodiment of the disclosure may comprise a ring gear 327 formed in a ring shape centered around the rotational axis to surround the first peripheral gear and the second peripheral gear, and engaged with the first peripheral gear and the second peripheral gear.

In the electronic device 300; 400; 500 according to an embodiment of the disclosure, a first face width Fw1 of the first central gear and a second face width Fw2 of the second central gear may be different from each other.

In the electronic device 300; 400; 500 according to an embodiment of the disclosure, a third face width Fw3 of the first peripheral gear and a fourth face width Fw4 of the second peripheral gear may be different from each other.

In the electronic device 300; 400; 500 according to an embodiment of the disclosure, the first face width may be smaller than the second face width.

In the electronic device 300; 400; 500 according to an embodiment of the disclosure, the third face width may be smaller than the fourth face width.

In the electronic device 300; 400; 500 according to an embodiment of the disclosure, the first central gear and the second peripheral gear may have a first reduction gear ratio R1.

In the electronic device 300; 400; 500 according to an embodiment of the disclosure, the second face width may be smaller than a product of the first face width and the first reduction gear ratio.

In the electronic device 300; 400; 500 according to an embodiment of the disclosure, the fourth face width may be smaller than a product of the third face width and the first reduction gear ratio.

In the electronic device 300; 400; 500 according to an embodiment of the disclosure, the first central gear may comprise a first central gear tooth 3212; 4212.

In the electronic device 300; 400; 500 according to an embodiment of the disclosure, the first peripheral gear may comprise a first peripheral gear tooth 3222; 4222 engaged with the first central gear tooth.

In the electronic device 300; 400; 500 according to an embodiment of the disclosure, a tooth surface CF1 of the first central gear may comprise a first end area EA1 and a second end area EA2, which may be end areas of the tooth surface of the first central gear in a direction of the rotational axis. A curve may be formed in the first end area in a direction in which a tooth thickness TT1 of the first central gear tooth decreases.

In the electronic device 300; 400; 500 according to an embodiment of the disclosure, a tooth surface PF1 of the first peripheral gear may comprise a third end area EA3 corresponding to the first end area and a fourth end area EA4 corresponding to the second end area. A curve may be formed in the fourth end area in a direction in which a tooth thickness TT2 of the first peripheral gear tooth decreases.

In the electronic device 300; 400; 500 according to an embodiment of the disclosure, the first end area may be an end area, located far from the motor, of the tooth surface of the first central gear.

In the electronic device 300; 400; 500 according to an embodiment of the disclosure, the tooth surface of the first central gear may comprise a first curved portion C1 formed at the first end area and curved so that the tooth thickness of the first central gear tooth decreases away from the motor.

In the electronic device 300; 400; 500 according to an embodiment of the disclosure, the tooth surface of the first peripheral gear may comprise a second curved portion C2 formed at the fourth end area and curved so that the tooth thickness of the first peripheral gear tooth decreases toward the motor.

A driving assembly according to an embodiment of the disclosure may comprise: a motor configured to generate a rotational force, and comprising a shaft configured to rotate along a rotational axis; a speed reduction gear assembly connected to the motor; and a driving gear connected to the speed reduction gear assembly. The speed reduction gear assembly comprises: a first central gear connected to the shaft; a first peripheral gear engaged with the first central gear; a first carrier connected to a center of the first peripheral gear, and configured to rotate around the rotation axis; a second central gear configured to, together with the first carrier, rotate around the rotation axis; a second peripheral gear engaged with the second central gear; and a ring gear formed in a ring shape centered around the rotational axis to surround the first peripheral gear and the second peripheral gear, and engaged with the first peripheral gear and the second peripheral gear. In such an embodiment, a first face width of the first central gear and a second face width of the second central gear may be different from each other, and additionally or alternatively a third face width of the first peripheral gear and a fourth face width of the second peripheral gear may be different from each other.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

While the disclosure has been described and shown in connection with an embodiment thereof, it should be appreciated that an embodiment is intended as limiting the disclosure but as illustrative. It will be apparent to one of ordinary skill in the art that various changes may be made in form and detail without departing from the overall scope of the disclosure, including the appended claims and their equivalents.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A driving assembly (240; 301; 401; 540) accommodated in an electronic device (300; 400; 500), the driving assembly (240; 301; 401; 540) comprising:

   a motor (310; 410; 541) configured to generate a rotational force, and comprising a shaft (311; 411) configured to rotate along a rotational axis (Ax);
   a speed reduction gear assembly (320; 420; 542) connected to the motor; and
   a driving gear (330; 543) connected to the speed reduction gear assembly,
   wherein the speed reduction gear assembly comprises:

   a first central gear (321; 421) connected to the shaft and comprising a first central gear tooth (3212; 4212);
   a first peripheral gear (322; 422) comprising a first peripheral gear tooth (3222; 4222) engaged with the first central gear tooth; and
   a ring gear (327) formed in a ring shape centered around the rotational axis to surround the first peripheral gear and engaged with the first peripheral gear,
   wherein a tooth surface (CF1) of the first central gear comprises a first end area (EA1) and a second end area (EA2), which are end areas of the tooth surface of the first central gear in a direction of the rotational axis,
   wherein a curve is formed in the first end area in a direction in which a tooth thickness (TT1) of the first central gear tooth decreases, and
   wherein a tooth surface (PF1) of the first peripheral gear comprises a third end area (EA3) corresponding to the first end area and a fourth end area (EA4) corresponding to the second end area, wherein a curve is formed in the fourth end area in a direction in which a tooth thickness (TT2) of the first peripheral gear tooth decreases.

2. The driving assembly (240; 301; 401; 540) of claim 1,

   wherein the first end area (EA1) is an end area, located far from the motor, of the tooth surface of the first central gear,
   wherein the tooth surface of the first central gear comprises a first curved portion (C1) formed at the first end area and curved so that the tooth thickness of the first central gear tooth decreases away from the motor, and
   wherein the tooth surface of the first peripheral gear comprises a second curved portion (C2) formed at the fourth end area and curved so that the tooth thickness of the first peripheral gear tooth decreases toward the motor.

3. The driving assembly (401) of claim 2,
   wherein the tooth surface of the first central gear (421) further comprises a third curved portion (C3) disposed at the second end area, and curved so that the tooth thickness of the first central gear tooth decreases toward the motor (410).

4. The driving assembly (401) of claim 2 or 3,
   wherein the tooth surface of the first peripheral gear (422) further comprises a fourth curved portion (C4) disposed at the third end area, and curved so that the tooth thickness of the first peripheral gear tooth decreases away from the motor (410).

**5.** The driving assembly (240; 301; 401; 540) of any one of claims 2 to 4,
wherein the first curved portion is configured to overlap an end of the first peripheral gear far from the motor in a radial direction centered on the rotation axis when the first peripheral gear moves to the maximum toward the motor.

**6.** The driving assembly (240; 301; 401; 540) of any one of claims 1 to 5,
wherein the speed reduction gear assembly further comprises:

a first carrier (323; 423) connected to a center of the first peripheral gear, and configured to rotate around the rotation axis;
a second central gear (324; 424) configured to rotate around the rotation axis with the first carrier, and comprises a second central gear tooth (3242; 4242); and
a second peripheral gear (325; 425) comprises a second peripheral gear tooth (3252; 4252) engaged with the second central gear tooth.

**7.** The driving assembly (240; 301; 401; 540) of claim 6,

wherein a first face width (Fw1) of the first central gear and a second face width (Fw2) of the second central gear are different from each other, and
wherein a third face width (Fw3) of the first peripheral gear and a fourth face width (Fw4) of the second peripheral gear are different from each other.

**8.** The driving assembly (240; 301; 401; 540) of claim 7,

wherein the first face width is smaller than the second face width, and
wherein the third face width is smaller than the fourth face width.

**9.** The driving assembly (240; 301; 401; 540) of claim 7 or 8,

wherein the first central gear and the first peripheral gear have a first reduction gear ratio (R1),
wherein the second face width is smaller than a product of the first face width and the first reduction gear ratio, and
wherein the fourth face width is smaller than a product of the third face width and the first reduction gear ratio.

**10.** The driving assembly (240; 301; 401; 540) of any one of claims 7 to 9,
wherein a ratio of the first face width to the second face width is substantially the same as a ratio of the third face width to the fourth face width.

**11.** The driving assembly (240; 301; 401; 540) of any one of claims 6 to 10,

wherein a tooth surface (CF2) of the second central gear comprises a fifth end area (EA5) which is an end area far from the motor in the direction of the rotational axis and a sixth end area (EA6) which is an end area closer to the motor in the direction of the rotational axis, and comprises a fifth curved portion (C5) formed at the fifth end area and curved so that a tooth thickness of the second central gear tooth decreases away from the motor, and
wherein a tooth surface (PF2) of the second peripheral gear comprises a seventh end area (EA7) corresponding to the fifth end area and an eighth end area (EA8) corresponding to the sixth end area, and comprises a sixth curved portion (C6) formed at the eighth end area and curved so that a tooth thickness of the second peripheral gear tooth decreases toward the motor.

**12.** The driving assembly (240; 301; 401; 540) of any one of claims 6 to 11,
wherein the speed reduction gear assembly further comprises:

a second carrier (326) connected to a center of the second peripheral gear, and configured to rotate around the rotation axis; and
a center shaft (328) extending along the rotation axis, configured to penetrate the shaft, the first central gear, the first carrier and the second central gear, and fixed to the second carrier.

13. The driving assembly (240; 301; 401; 540) of claim 12,
   wherein the center shaft is configured to rotate at the same angular velocity as the second carrier and at a different angular velocity from the shaft, the first central gear, the first carrier, and the second center gear.

14. The driving assembly (240; 301; 401; 540) of any one of claims 1 to 13,
   wherein the driving gear is a pinion gear capable of engaging and operating with a rack gear (240d).

15. An electronic device (300; 400; 500) comprising the driving assembly (240; 301; 401; 540) according to any one of claims 1 to 14, comprising:

   a housing (210; 510) including a first housing portion (201; 501) and a second housing portion (202; 502) movably connected to the first housing portion; and
   a flexible display (203; 520) disposed on the first housing portion and the second housing portion and configured to change in at least one of shape or size as the second housing portion moves with respect to the first housing portion;

   wherein the driving assembly (240; 301; 401; 540) is disposed on at least one of the first housing portion or the second housing portion and configured to provide power to allow the second housing portion to move with respect to the first housing portion

FIG. 1

FIG. 2

FIG. 3

FIG. 4

101

240d

248

288

A'

240

A

240b

240a

289

240 { 240a
240b
240d

# FIG. 5

101
EP2
202
248
240d
240
288
240a
240b
EP1
201
289

## FIG. 6

**FIG. 7**

FIG. 8

FIG. 9

FIG. 10

FIG. 11

FIG. 12

FIG. 13

## FIG. 14

## FIG. 15

310

311, 323

3212, 3242

C2, C6

PF1, PF2

3222, 3252

-X ⟷ +X

CF1, CF2

C1, C5

3212, 3242

FIG. 16

310

311, 323

3212, 3242

CF1, CF2

C1, C5

3222, 3252

-X ⟷ +X

C2, C6

PF1, PF2

3212, 3242

FIG. 17

FIG. 18

FIG. 19

## FIG. 20

FIG. 21

FIG. 22

FIG. 23

FIG. 24

| 510 { | 501<br>502 | 531 { | 531a<br>531b | 540 { | 540a<br>540b | 543 { | 543a<br>543b |

FIG. 25

## INTERNATIONAL SEARCH REPORT

| International application No. |
|---|
| **PCT/KR2025/014874** |

| A. | CLASSIFICATION OF SUBJECT MATTER |
|---|---|

**G06F 1/16**(2006.01)i; **F16H 19/04**(2006.01)i; **H02K 7/116**(2006.01)i; **H04M 1/02**(2006.01)i

According to International Patent Classification (IPC) or to both national classification and IPC

| B. | FIELDS SEARCHED |
|---|---|

Minimum documentation searched (classification system followed by classification symbols)

G06F 1/16(2006.01); E06B 9/42(2006.01); E06B 9/68(2006.01); F16H 3/62(2006.01); F16H 3/72(2006.01); F16H 57/08(2006.01); G09F 9/30(2006.01); H04M 1/72454(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 모터(motor), 감속 기어 어셈블리(speed reduction gear assembly), 구동 기어 (driving gear), 샤프트(shaft), 중심 기어(central gear), 톱니(teeth), 링 기어(ring gear), 폭(width), 롤러블 전자 장치(rollable electronic device)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0080673 A (BEIJING XIAOMI MOBILE SOFTWARE CO., LTD.) 14 June 2022 (2022-06-14) paragraphs [0044]-[0046], [0053], [0055], [0058]-[0061]; and figures 1, 3-5 | 1-15 |
| Y | US 2007-0042860 A1 (MATTHIEU RIHN et al.) 22 February 2007 (2007-02-22) paragraphs [0025], [0032]; and figures 3a, 4a | 1-15 |
| Y | KR 10-2022-0154153 A (LG ELECTRONICS INC.) 21 November 2022 (2022-11-21) paragraphs [0330], [0332]; and figure 12 | 14 |
| A | JP 3239861 U9 (KIKUCHI SEISAKUSHO CO., LTD.) 17 November 2022 (2022-11-17) paragraphs [0015]-[0035]; and figures 1-3 | 1-15 |
| A | KR 10-2019-0084728 A (WINTEC KOREA INC.) 17 July 2019 (2019-07-17) paragraphs [0039]-[0041]; and figures 5-6 | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 December 2025** | **24 December 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | International application No.<br>**PCT/KR2025/014874** | |

| Patent document<br>cited in search report | | Publication date<br>(day/month/year) | Patent family member(s) | | | Publication date<br>(day/month/year) |
|---|---|---|---|---|---|---|
| KR 10-2022-0080673 | A | 14 June 2022 | CN | 114598759 | A | 07 June 2022 |
| | | | EP | 4009136 | A1 | 08 June 2022 |
| | | | EP | 4009136 | B1 | 28 August 2024 |
| | | | JP | 2022-090597 | A | 17 June 2022 |
| | | | JP | 7399908 | B2 | 18 December 2023 |
| | | | KR | 10-2542718 | B1 | 14 June 2023 |
| | | | US | 11647597 | B2 | 09 May 2023 |
| | | | US | 2022-0183167 | A1 | 09 June 2022 |
| US 2007-0042860 | A1 | 22 February 2007 | DE | 102006038481 | A1 | 15 March 2007 |
| KR 10-2022-0154153 | A | 21 November 2022 | KR | 10-2721261 | B1 | 23 October 2024 |
| | | | US | 11334118 | B2 | 17 May 2022 |
| | | | US | 2021-0405703 | A1 | 30 December 2021 |
| | | | WO | 2022-004908 | A1 | 06 January 2022 |
| JP 3239861 | U9 | 17 November 2022 | | None | | |
| KR 10-2019-0084728 | A | 17 July 2019 | CN | 111566306 | A | 21 August 2020 |
| | | | CN | 111566306 | B | 01 April 2022 |
| | | | EP | 3739162 | A1 | 18 November 2020 |
| | | | EP | 3739162 | A4 | 27 October 2021 |
| | | | JP | 2021-509161 | A | 18 March 2021 |
| | | | JP | 6928212 | B2 | 01 September 2021 |
| | | | KR | 10-2051896 | B1 | 06 December 2019 |
| | | | US | 11261659 | B2 | 01 March 2022 |
| | | | US | 2021-0032931 | A1 | 04 February 2021 |
| | | | WO | 2019-139306 | A1 | 18 July 2019 |

Form PCT/ISA/210 (patent family annex) (July 2022)